(19) Europäisches Patentamt
European Patent Office
Office européen des brevets

(11) **EP 4 518 231 A1**

(12) **EUROPEAN PATENT APPLICATION**
published in accordance with Art. 153(4) EPC

(43) Date of publication:
**05.03.2025 Bulletin 2025/10**

(21) Application number: **23822995.9**

(22) Date of filing: **07.06.2023**

(51) International Patent Classification (IPC):
**H04L 5/00** (2006.01)       **H04W 72/04** (2023.01)

(52) Cooperative Patent Classification (CPC):
**H04L 5/00; H04W 72/04**

(86) International application number:
**PCT/CN2023/098789**

(87) International publication number:
**WO 2023/241426 (21.12.2023 Gazette 2023/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.06.2022   CN 202210665435
03.08.2022   CN 202210926852**

(71) Applicant: **Huawei Technologies Co., Ltd.
Shenzhen, Guangdong 518129 (CN)**

(72) Inventors:
• **LI, Qiang
  Shenzhen, Guangdong 518129 (CN)**
• **XUE, Lixia
  Shenzhen, Guangdong 518129 (CN)**
• **XUE, Yifan
  Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **COMMUNICATION METHOD AND COMMUNICATION APPARATUS**

(57)    Embodiments of this application provide a communication method and a communication apparatus. The communication method includes: A terminal device performs blind detection on downlink control information DCI. The terminal device determines a sending slot of a physical downlink shared channel PDSCH and/or a sending slot of a physical uplink shared channel PUSCH based on a target slot and the DCI, where the target slot is one of a plurality of slots that carry the DCI, the plurality of slots are for transmitting one piece of DCI, or each of the plurality of slots is for transmitting the same piece of DCI, and the target slot is preconfigured. In this way, when one piece of DCI is transmitted in the plurality of slots or the same piece of DCI is transmitted in each of the plurality of slots, the terminal device may use the preconfigured target slot as a sending slot of the DCI, so that the sending slot of the PDSCH and/or the sending slot of the PUSCH can be correctly determined.

<u>200</u>

S210: Perform blind detection on DCI

S220: Determine a sending slot of a PDSCH and/or a sending slot of a PUSCH based on a target slot and the DCI

FIG. 9

EP 4 518 231 A1

**Description**

This application claims priority to Chinese Patent Application No. 202210665435.2, filed with the China National Intellectual Property Administration on June 13, 2022 and entitled "CONTROL INFORMATION SENDING METHOD", and claims priority to Chinese Patent Application No. 202210926852.8, filed with the China National Intellectual Property Administration on August 3, 2022 and entitled "COMMUNICATION METHOD AND COMMUNICATION APPARATUS", which are incorporated herein by reference in their entireties.

**TECHNICAL FIELD**

Embodiments of this application relate to the field of communication technologies, and more specifically, to a communication method and a communication apparatus.

**BACKGROUND**

In some mobile communication application scenarios, a communication capability of a reduced capability user equipment (reduced capability user equipment) such as a wearable device or a kids phone watch is not necessarily strong, but cost control for the reduced capability user equipment is more important. For example, a terminal device (for example, a mobile phone) with a strong communication capability may need to support a communication bandwidth of 100 MHz, but the reduced capability user equipment may need to support only a communication bandwidth of 20 MHz or 5 MHz.

When a network device sends downlink control information (downlink control information, DCI) to the reduced capability user equipment, to ensure high demodulation performance of the DCI, the network device may transmit the DCI at a high aggregation level. However, the network device needs to transmit the DCI in a plurality of slots dispersedly due to the narrow communication bandwidth supported by the reduced capability user equipment. Alternatively, the network device may reduce the aggregation level used by the DCI, but needs to repeatedly transmit the same DCI in each of a plurality of slots.

Usually, a normal capability user equipment may determine a sending slot of a physical downlink shared channel (physical downlink shared channel, PDSCH) and/or a sending slot of a physical uplink shared channel (physical uplink shared channel, PUSCH) based on a sending slot of the DCI.

However, in a mobile communication application scenario of the reduced capability user equipment, because one piece of DCI is transmitted in a plurality of slots or the same piece of DCI is repeatedly transmitted in each of a plurality of slots, the reduced capability user equipment cannot determine a sending slot of the DCI, and therefore cannot continue to use an existing solution to determine the sending slot of the PDSCH and/or the sending slot of the PUSCH.

**SUMMARY**

Embodiments of this application provide a communication method and a communication apparatus. In this way, when one piece of DCI is transmitted in a plurality of slots or the same piece of DCI is transmitted in each of a plurality of slots, a terminal device can correctly determine a sending slot of a PDSCH and/or a sending slot of a PUSCH.

According to a first aspect, a communication method is provided. The communication method may be performed by a terminal device, or may be performed by a component of the terminal device, such as a processor, a chip, or a chip system of the terminal device, or may be implemented by a logical module or software that can implement all or some functions of the terminal device.

The communication method includes: performing blind detection on downlink control information DCI; and determining a sending slot of a physical downlink shared channel PDSCH and/or a sending slot of a physical uplink shared channel PUSCH based on a target slot and the DCI, where the target slot is one of a plurality of slots that carry the DCI, the plurality of slots are for transmitting one piece of DCI, or each of the plurality of slots is for transmitting the same piece of DCI, and the target slot is preconfigured.

In this embodiment of this application, when one piece of DCI is transmitted in the plurality of slots or the same piece of DCI is transmitted in each of the plurality of slots, the terminal device may use the preconfigured target slot as a sending slot of the DCI, so that the sending slot of the PDSCH and/or the sending slot of the PUSCH can be correctly determined.

With reference to the first aspect, in some implementations of the first aspect, before the determining a sending slot of a PDSCH and/or a sending slot of a PUSCH based on a target slot and the DCI, the communication method further includes: receiving first configuration information from a network device, where the first configuration information is for determining the target slot.

With reference to the first aspect, in some implementations of the first aspect, before the performing blind detection on downlink control information DCI, the communication method further includes: receiving second configuration information from the network device, where the second configuration information indicates a quantity of blind detections at a plurality of aggregation levels, the plurality of aggregation levels include a first aggregation level and a second aggregation level, a quantity of blind detections at the first aggregation level is 0, and a quantity of blind detections at the second aggregation level is not 0, where the first aggregation level is different from the second aggregation level, and a quantity of slots occupied by DCI that uses the first aggregation level is different from a quantity of slots occupied by DCI that uses the second aggregation level; or the first aggregation level is the same as the second aggregation level, and a quantity of repeated transmissions of DCI that uses the first aggregation level is different from a quantity of repeated transmissions of DCI that uses the second aggregation level. The performing blind detection on downlink control information DCI includes: performing blind detection on the DCI based on the second configuration information.

The network device only configures the terminal device to perform blind detection only at the second aggregation level in the aggregation levels that may be confused, and sets a quantity of blind detections at the first aggregation level in the aggregation levels that may be confused to 0. In this way, in the process of performing blind detection on the DCI, the terminal device may perform blind detection only at one aggregation level in the aggregation levels that may be confused, and does not perform blind detection at the first aggregation level in the aggregation levels that may be confused. This can avoid confusion of the aggregation levels of the DCI by the terminal device in the process of performing blind detection on the DCI, so that the target slot determined by the terminal device is accurate.

With reference to the first aspect, in some implementations of the first aspect, the target slot is a last slot that carries the DCI; or the target slot is a 1st slot that carries the DCI.

With reference to the first aspect, in some implementations of the first aspect, the communication method further includes: receiving third configuration information from the network device, where the third configuration information indicates timing periodicities of DCI corresponding to a plurality of aggregation levels, the target slot is a slot in the timing periodicity, the plurality of aggregation levels include a first aggregation level and a second aggregation level, and a timing periodicity of DCI that uses the first aggregation level is the same as a timing periodicity of DCI that uses the second aggregation level, where the first aggregation level is different from the second aggregation level, and a quantity of slots occupied by the DCI that uses the first aggregation level is different from a quantity of slots occupied by the DCI that uses the second aggregation level; or the first aggregation level is the same as the second aggregation level, and a quantity of repeated transmissions of the DCI that uses the first aggregation level is different from a quantity of repeated transmissions of the DCI that uses the second aggregation level.

The network device includes, in the DCI, the timing periodicities of the DCI corresponding to the plurality of aggregation levels. In this way, in the process of performing blind detection on the DCI, the terminal device determines the target slot based on the timing periodicities of the DCI corresponding to the aggregation levels. In this way, even if the terminal device successfully demodulates the DCI via some CCEs carrying the DCI, the terminal device still needs to determine the target slot based on the timing periodicities of the DCI corresponding to the aggregation levels, so that the target slot determined by the terminal device is accurate.

With reference to the first aspect, in some implementations of the first aspect, the third configuration information further indicates a start location of the timing periodicity.

With reference to the first aspect, in some implementations of the first aspect, the target slot is a last slot in the timing periodicity; or the target slot is a 1st slot in the timing periodicity.

With reference to the first aspect, in some implementations of the first aspect, the first aggregation level is 8, the second aggregation level is 16, the quantity of slots occupied by the DCI that uses the first aggregation level is 2, and the quantity of slots occupied by the DCI that uses the second aggregation level is 4; or the first aggregation level is 16, the second aggregation level is 8, the quantity of slots occupied by the DCI that uses the first aggregation level is 4, and the quantity of slots occupied by the DCI that uses the second aggregation level is 2; or both the first aggregation level and the second aggregation level are 4, both the quantity of slots occupied by the DCI that uses the first aggregation level and the quantity of slots occupied by the DCI that uses the second aggregation level are 1, and the DCI that uses the second aggregation level is repeatedly transmitted in four slots.

With reference to the first aspect, in some implementations of the first aspect, the DCI indicates an aggregation level used by the DCI.

The network device may include, in the DCI, the aggregation levels used by the DCI. In this way, in the process of performing blind detection on the DCI, the terminal device does not confuse the aggregation levels of the DCI, so that the target slot determined by the terminal device is accurate.

With reference to the first aspect, in some implementations of the first aspect, the communication method further includes: determining that the target slot is a slot in a DCI sending periodicity when blindly detecting that an aggregation level of the DCI is not equal to the aggregation level indicated by the DCI.

In the process of performing blind detection on the DCI, the terminal device determines that the target slot is the slot in the DCI sending periodicity when blindly detecting that the aggregation level of the DCI is not equal to the aggregation level indicated by the DCI. In this way, even if the terminal device successfully demodulates the DCI via some CCEs carrying the DCI, the terminal device still needs to determine the target slot based on the DCI sending periodicity, so that the target slot determined by the terminal device is accurate.

With reference to the first aspect, in some implementations of the first aspect, the DCI indicates a quantity of repeated transmissions of the DCI.

The network device may include, in the DCI, the quantity of repeated transmissions of the DCI. In this way, in the process of performing blind detection on the DCI, the terminal device does not confuse quantities of repeated transmissions of the DCI, so that the target slot determined by the terminal device is accurate.

With reference to the first aspect, in some implementations of the first aspect, the communication method further includes: determining that the target slot is a slot in a DCI sending periodicity when blindly detecting that a quantity of the plurality of slots for transmitting the same piece of DCI is not equal to the quantity of repeated transmissions of the DCI.

In the process of performing blind detection on the DCI, the terminal device determines that the target slot is the slot in the DCI sending periodicity when blindly detecting that the quantity of the plurality of slots for transmitting the same piece of DCI is not equal to the quantity of repeated transmissions of the DCI. In this way, even if the terminal device successfully demodulates the DCI via some CCEs carrying the DCI, the terminal device still needs to determine the target slot based on the DCI sending periodicity, so that the target slot determined by the terminal device is accurate.

With reference to the first aspect, in some implementations of the first aspect, the target slot is a last slot or a 1st slot in the DCI sending periodicity.

With reference to the first aspect, in some implementations of the first aspect, the performing blind detection on DCI includes: obtaining a second sequence, where the second sequence is a sequence of demodulated DCI; performing de-interleaving processing on the second sequence to obtain a first sequence; and decoding the first sequence to obtain information carried in the DCI.

In the process of performing blind detection the DCI, the terminal device needs to perform de-interleaving processing on the sequence of the DCI. In other words, the network device performs interleaving processing on the sequence of the DCI after encoding the sequence of the DCI. In this way, a case in which the DCI can be successfully demodulated via only some CCEs carrying the DCI can be avoided for the terminal device, and therefore, the terminal device does not incorrectly determine the target slot.

According to a second aspect, a communication method is provided. The communication method may be performed by a network device, or may be performed by a component of the network device, such as a processor, a chip, or a chip system of the network device, or may be implemented by a logical module or software that can implement all or some functions of the network device.

The communication method includes: sending first configuration information to a terminal device, where the first configuration information is used by the terminal device to determine a target slot, the target slot is one of a plurality of slots that carry downlink control information DCI, and the plurality of slots are for transmitting one piece of DCI, or each of the plurality of slots is for transmitting the same piece of DCI.

With reference to the second aspect, in some implementations of the second aspect, the communication method further includes: sending second configuration information to the terminal device, where the second configuration information indicates a quantity of blind detections at a plurality of aggregation levels, the plurality of aggregation levels include a first aggregation level and a second aggregation level, a quantity of blind detections at the first aggregation level is 0, and a quantity of blind detections at the second aggregation level is not 0, where the first aggregation level is different from the second aggregation level, and a quantity of slots occupied by DCI that uses the first aggregation level is different from a quantity of slots occupied by DCI that uses the second aggregation level; or the first aggregation level is the same as the second aggregation level, and a quantity of repeated transmissions of DCI that uses the first aggregation level is different from a quantity of repeated transmissions of DCI that uses the second aggregation level.

With reference to the second aspect, in some implementations of the second aspect, the target slot is a last slot that carries the DCI; or the target slot is a 1st slot that carries the DCI.

With reference to the second aspect, in some implementations of the second aspect, the communication method further includes: sending third configuration information to the terminal device, where the third configuration information indicates timing periodicities of DCI corresponding to a plurality of aggregation levels, the target slot is a slot in the timing periodicities, the plurality of aggregation levels include a first aggregation level and a second aggregation level, and a timing periodicity of DCI that uses the first aggregation level is the same as a timing periodicity of DCI that uses the second aggregation level, where the first aggregation level is different from the second aggregation level, and a quantity of slots occupied by the DCI that uses the first aggregation level is different from a quantity of slots occupied by the DCI that uses the second aggregation level; or the first aggregation level is the same as the second aggregation level, and a quantity of repeated transmissions of the DCI that uses the first aggregation level is different from a quantity of repeated transmissions of the DCI that uses the second aggregation level.

With reference to the second aspect, in some implementations of the second aspect, the third configuration information further indicates a start location of the timing periodicity.

With reference to the second aspect, in some implementations of the second aspect, the target slot is a last slot in the timing periodicity; or the target slot is a 1st slot in the timing periodicity.

With reference to the second aspect, in some implementations of the second aspect, the first aggregation level is 8, the second aggregation level is 16, the quantity of slots occupied by the DCI that uses the first aggregation level is 2, and the quantity of slots occupied by the DCI that uses the second aggregation level is 4; or the first aggregation level is 16, the second aggregation level is 8, the quantity of slots occupied by the DCI that uses the first aggregation level is 4, and the quantity of slots occupied by the DCI that uses the second aggregation level is 2; or both the first aggregation level and the second aggregation level are 4, both the quantity of slots occupied by the DCI that uses the first aggregation level and the quantity of slots occupied by the DCI that uses the second aggregation level are 1, and the DCI that uses the second aggregation level is repeatedly transmitted in four slots.

With reference to the second aspect, in some implementations of the second aspect, the communication method further includes: sending the DCI to the terminal device, where the DCI indicates an aggregation level used by the DCI or a quantity of repeated transmissions of the DCI.

With reference to the second aspect, in some implementations of the second aspect, the target slot is a last slot or a 1st slot in a DCI sending periodicity.

With reference to the second aspect, in some implementations of the second aspect, the communication method further includes: obtaining a first sequence, where the first sequence is a sequence of DCI obtained through encoding and code rate matching; performing interleaving processing on the first sequence to obtain a second sequence; and mapping, based on an arrangement order of elements in the second sequence, each element in the second sequence to a corresponding CCE, and sending the DCI.

With reference to the second aspect, in some implementations of the second aspect, the performing interleaving processing on the first sequence to obtain a second sequence includes: converting the first sequence into a triangular matrix in a manner of conversion by row or column, where a length of the first sequence is E, a quantity of columns or rows in the triangular matrix is $T_1$, and $T_1$ is a smallest integer satisfying $\dfrac{T_1(T_1+1)}{2} \geq E$ ; and determining a sequence obtained by sequentially arranging elements in the triangular matrix by column or row as the second sequence.

With reference to the second aspect, in some implementations of the second aspect, the performing interleaving processing on the first sequence to obtain a second sequence includes: dividing the first sequence into $H_1$ subsequences based on an arrangement order of elements in the first sequence, where a length of each of the $H_1$ subsequences is a quantity of bits transmitted by one CCE; and interleaving the $H_1$ subsequences to obtain the second sequence.

With reference to the second aspect, in some implementations of the second aspect, the interleaving the $H_1$ subsequences to obtain the second sequence includes: mapping an $i^{th}$ subsequence in the $H_1$ subsequences to a $k^{th}$ CCE on a $j^{th}$ PDCCH monitoring occasion, where $j=\mathrm{mod}(v,N)$, $k = \left\lfloor \dfrac{v}{N} \right\rfloor$ , $v$ represents a number of the $i^{th}$ subsequence in the $H_1$ subsequences, and N represents a quantity of slots occupied by the DCI; and arranging, based on an arrangement order of PDCCH monitoring occasions and an arrangement order of CCEs on the PDCCH monitoring occasion, subsequences mapped to each CCE, to obtain the second sequence.

With reference to the second aspect, in some implementations of the second aspect, an aggregation level used by the DCI is 8, and the DCI is transmitted in two slots; or an aggregation level used by the DCI is 16, and the DCI is transmitted in four slots; or an aggregation level used by the DCI is 4, and the DCI is repeatedly transmitted in four slots.

With reference to the second aspect, in some implementations of the second aspect, the performing interleaving processing on the first sequence to obtain a second sequence includes: mapping an $i^{th}$ subsequence in the $H_1$ subsequences to a $k^{th}$ CCE, where $k=\mathrm{mod}(i+m, M)$, and m and M are positive integers; and arranging, based on an arrangement order of CCEs on a PDCCH monitoring occasion, subsequences mapped to each CCE, to obtain the second sequence.

With reference to the second aspect, in some implementations of the second aspect, an aggregation level used by the DCI is 4, and the DCI is transmitted in one slot; or an aggregation level used by the DCI is 4, and the DCI is repeatedly transmitted in four slots.

For technical effects of any one of the possible implementations of the second aspect, refer to technical effects of a corresponding implementation of the first aspect. Details are not described herein again.

According to a third aspect, a communication apparatus is provided. The communication apparatus is configured to implement the communication method in any one of the first aspect and the possible implementations of the first aspect. The communication apparatus may be the foregoing terminal device, or may be an apparatus, for example, a chip, included in the foregoing terminal device. The communication apparatus includes a corresponding module, unit, or means (means) for implementing the foregoing method. The module, the unit, or the means may be implemented by hardware, software, or may be implemented by executing corresponding software by hardware. The hardware or the software includes one or more modules or units corresponding to the foregoing functions.

In some possible designs, the communication apparatus may include a processing module and a transceiver module. The transceiver module may also be referred to as a transceiver unit, and is configured to implement a sending function and/or a receiving function in any one of the first aspect and the possible implementations of the first aspect. The transceiver module may include a transceiver circuit, a transceiver machine, a transceiver, or a communication interface. The processing module may be configured to implement a processing function in any one of the first aspect and the possible implementations of the first aspect.

In some possible designs, the transceiver module includes a sending module and a receiving module, respectively configured to implement the sending function and the receiving function in any one of the first aspect and the possible implementations of the first aspect.

According to a fourth aspect, a communication apparatus is provided. The communication apparatus is configured to implement the communication method in any one of the second aspect and the possible implementations of the second aspect. The communication apparatus may be the foregoing network device, or may be an apparatus, for example, a chip, included in the foregoing network device. The communication apparatus includes a corresponding module, unit, or means (means) for implementing the foregoing method. The module, the unit, or the means may be implemented by hardware, software, or may be implemented by executing corresponding software by hardware. The hardware or the software includes one or more modules or units corresponding to the foregoing functions.

In some possible designs, the communication apparatus may include a processing module and a transceiver module. The transceiver module may also be referred to as a transceiver unit, and is configured to implement a sending function and/or a receiving function in any one of the second aspect and the possible implementations of the second aspect. The transceiver module may include a transceiver circuit, a transceiver machine, a transceiver, or a communication interface. The processing module may be configured to implement a processing function in any one of the second aspect and the possible implementations of the second aspect.

In some possible designs, the transceiver module includes a sending module and a receiving module, respectively configured to implement the sending function and the receiving function in any one of the second aspect and the possible implementations of the second aspect.

According to a fifth aspect, a communication apparatus is provided. The communication apparatus includes one or more processors, one or more memories, and one or more computer programs. The one or more computer programs are stored in the one or more memories. The one or more computer programs include instructions, and when the instructions are executed by the communication apparatus, the communication apparatus is enabled to perform the communication method in any one of the first aspect and the possible implementations of the first aspect.

The communication apparatus may be the foregoing terminal device, or may be an apparatus, for example, a chip, included in the foregoing terminal device.

According to a sixth aspect, a communication apparatus is provided. The communication apparatus includes one or more processors, one or more memories, and one or more computer programs. The one or more computer programs are stored in the one or more memories. The one or more computer programs include instructions, and when the instructions are executed by the communication apparatus, the communication apparatus is enabled to perform the communication method in any one of the second aspect and the possible implementations of the second aspect.

The communication apparatus may be the foregoing network device, or may be an apparatus, for example, a chip, included in the foregoing network device.

According to a seventh aspect, a communication apparatus is provided. The communication apparatus includes a processor and a communication interface. The communication interface is configured to communicate with a module other than the communication apparatus. The processor is configured to execute a computer program or instructions, to enable the communication apparatus to perform the communication method in any one of the first aspect and the possible implementations of the first aspect.

The communication apparatus may be the foregoing terminal device, or may be an apparatus, for example, a chip, included in the foregoing terminal device.

According to an eighth aspect, a communication apparatus is provided. The communication apparatus includes a processor and a communication interface. The communication interface is configured to communicate with a module other than the communication apparatus. The processor is configured to execute a computer program or instructions, to enable the communication apparatus to perform the communication method in any one of the second aspect and the possible implementations of the second aspect.

The communication apparatus may be the foregoing network device, or may be an apparatus, for example, a chip, included in the foregoing network device.

According to a ninth aspect, a communication apparatus is provided. The communication apparatus includes an interface circuit and a processor. The interface circuit is a code/data read/write interface circuit, and the interface circuit is configured to receive computer-executable instructions (the computer-executable instructions are stored in a memory, and may be directly read from the memory, or may be read via another component) and transmit the computer-executable instructions to the processor. The processor is configured to execute the computer-executable instructions, to enable the communication apparatus to perform the communication method in any one of the first aspect and the possible implementations of the first aspect.

The communication apparatus may be the foregoing terminal device, or may be an apparatus, for example, a chip, included in the foregoing terminal device.

According to a tenth aspect, a communication apparatus is provided. The communication apparatus includes an interface circuit and a processor. The interface circuit is a code/data read/write interface circuit, and the interface circuit is configured to receive computer-executable instructions (the computer-executable instructions are stored in a memory, and may be directly read from the memory, or may be read via another component) and transmit the computer-executable instructions to the processor. The processor is configured to execute the computer-executable instructions, to enable the communication apparatus to perform the communication method in any one of the second aspect and the possible implementations of the second aspect.

The communication apparatus may be the foregoing network device, or may be an apparatus, for example, a chip, included in the foregoing network device.

According to an eleventh aspect, a communication apparatus is provided. The communication apparatus includes at least one processor. The processor is configured to execute a computer program or instructions, to enable the communication apparatus to perform the communication method in any one of the first aspect and the possible implementations of the first aspect.

The communication apparatus may be the foregoing terminal device, or may be an apparatus, for example, a chip, included in the foregoing terminal device.

In some possible designs, the communication apparatus includes a memory, and the memory is configured to store necessary program instructions and data. The memory may be coupled to the processor, or may be independent of the processor.

In some possible designs, the communication apparatus may be a chip or a chip system. When the apparatus is a chip system, the apparatus may include a chip, or may include a chip and another discrete component.

According to a twelfth aspect, a communication apparatus is provided. The communication apparatus includes at least one processor. The processor is configured to execute a computer program or instructions, to enable the communication apparatus to perform the communication method in any one of the second aspect and the possible implementations of the second aspect.

The communication apparatus may be the foregoing network device, or may be an apparatus, for example, a chip, included in the foregoing network device.

In some possible designs, the communication apparatus includes a memory, and the memory is configured to store necessary program instructions and data. The memory may be coupled to the processor, or may be independent of the processor.

In some possible designs, the communication apparatus may be a chip or a chip system. When the apparatus is a chip system, the apparatus may include a chip, or may include a chip and another discrete component.

It may be understood that when the communication apparatus provided in any one of the third aspect to the twelfth aspect is a chip, the foregoing sending action/function may be understood as information output, and the foregoing receiving action/function may be understood as information input.

According to a thirteenth aspect, a computer-readable storage medium is provided. The computer-readable storage medium stores instructions. When the instructions are run on a communication apparatus, the communication apparatus is enabled to perform the communication method in any one of the first aspect, the second aspect, and the possible implementations of the first aspect and the second aspect.

According to a fourteenth aspect, a computer program product including instructions is provided. When the computer program product is run on a communication apparatus, the communication apparatus is enabled to perform the communication method in any one of the first aspect, the second aspect, and the possible implementations of the first aspect and the second aspect.

According to a fifteenth aspect, a chip is provided. The chip includes at least one processor and an interface circuit. The interface circuit is configured to provide program instructions or data for the at least one processor. The at least one processor is configured to execute the program instructions, to implement the communication method in any one of the first aspect, the second aspect, and the possible implementations of the first aspect and the second aspect.

According to a sixteenth aspect, a communication system is provided. The communication system includes a terminal device and a network device. The terminal device is configured to perform the communication method in any one of the first aspect and the possible implementations of the first aspect, and/or the network device is configured to perform the communication method in any one of the second aspect and the possible implementations of the second aspect.

## BRIEF DESCRIPTION OF DRAWINGS

FIG. 1 is a diagram of an example of an architecture of a communication system to which an embodiment of this application is applicable;

FIG. 2 is a diagram of an example of distribution of a PDCCH and a PDSCH on one carrier;

FIG. 3 is a diagram of an example of distribution of a PDCCH on one carrier;

FIG. 4 is a schematic flowchart of an example of DCI processing;

FIG. 5 is a diagram of an example of a structure of a circular buffer;

FIG. 6 is a diagram of RBs occupied by one CORESET of a reduced capability user equipment in frequency domain;

FIG. 7 is a diagram of an example in which one piece of DCI is transmitted in four slots;

FIG. 8 is a diagram of an example in which a same piece of DCI is repeatedly transmitted in four slots;

FIG. 9 is a schematic flowchart of an example of a communication method according to an embodiment of this application;

FIG. 10 is a schematic flowchart of another example of a communication method according to an embodiment of this application;

FIG. 11 is a diagram of an example of a structure of a first interleaver according to an embodiment of this application;

FIG. 12 is a diagram of an example in which a first sequence is mapped to a CCE according to an embodiment of this application;

FIG. 13 is a diagram of another example in which a first sequence is mapped to a CCE according to an embodiment of this application;

FIG. 14 is a diagram of an example of a CCE blindly detected by a terminal device according to an embodiment of this application;

FIG. 15 is a diagram of another example of a CCE blindly detected by a terminal device according to an embodiment of this application;

FIG. 16 is a diagram of an example of a structure of a communication apparatus according to an embodiment of this application; and

FIG. 17 is a diagram of another example of a structure of a communication apparatus according to an embodiment of this application.

## DESCRIPTION OF EMBODIMENTS

The following describes technical solutions of embodiments in this application with reference to the accompanying drawings.

For ease of understanding of embodiments of this application, the following descriptions are first provided before embodiments of this application are described.

First, in embodiments of this application, "indication" may include a direct indication and an indirect indication, or may include an explicit indication and an implicit indication. Information indicated by a piece of information (for example, first configuration information described below) is referred to as to-be-indicated information. In a specific implementation process, the to-be-indicated information may be indicated in a plurality of manners, for example, but not limited to, a manner of directly indicating the to-be-indicated information, for example, indicating the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement order of a plurality of pieces of information that is pre-agreed on (for example, stipulated in a communication protocol), to reduce indication overheads to some extent.

Second, "first", "second", and various numbers in the following embodiments are only used for distinguishing for ease of description, but are not intended to limit the scope of embodiments of this application. For example, the terms are used to distinguish between different configuration information, aggregation levels, sequences, slots, or the like.

Third, "a plurality of" in embodiments of this application means two or more.

Fourth, a "resource block (resource block, RB)", a "slot", an "orthogonal frequency division multiplexing (orthogonal frequency division multiplexing, OFDM) symbol", a "control channel resource element (control channel element, CCE)", and the like in embodiments of this application are all described by using an example in which numbering starts from 0, and should not constitute a limitation on this application.

Fifth, a "slot" in embodiments of this application is described by using an example in which the "slot" includes 14 OFDM symbols, and should not constitute a limitation on this application. For example, in new radio (new radio, NR), one slot may also include 12 OFDM symbols. For another example, in long term evolution (long term evolution, LTE), one slot may also include seven OFDM symbols.

Sixth, a "CCE" in embodiments of this application is described by using an example in which the "CCE" is for transmitting 108 bits, and should not constitute a limitation on this application.

Seventh, a number in embodiments of this application may also be referred to as a sequence number.

The technical solutions in embodiments of this application may be applied to various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, an LTE system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, or an NR system.

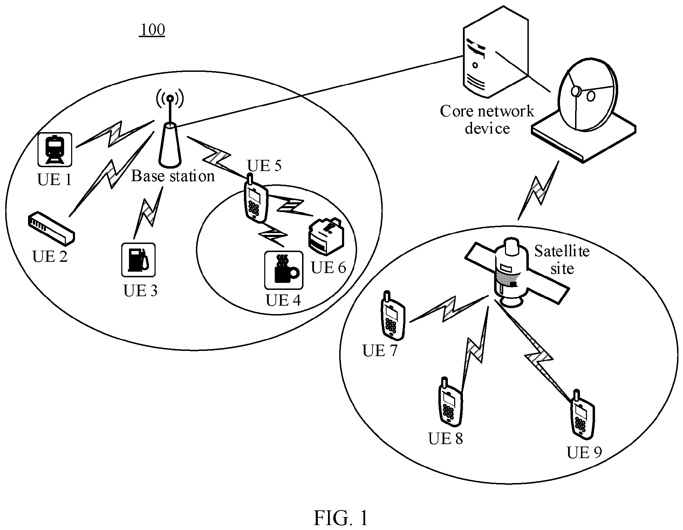

For ease of understanding of embodiments of this application, a communication system to which a communication method provided in embodiments of this application is applicable is first described in detail with reference to FIG. 1. FIG. 1 is a diagram of a communication system 100 to which a communication method according to an embodiment of this application is applicable.

In an example, as shown in FIG. 1, the communication system 100 may include at least one network device, for example, a gNB (gNB) in a 5G system and a satellite site that are shown in FIG. 1. The communication system 100 may further include at least one terminal device, for example, a user equipment (user equipment, UE) 1 to a UE 9 that are shown in FIG. 1. The network device may communicate with each terminal device over a radio link. For example, the network device may send configuration information to the terminal device, and the terminal device may send uplink data to the network device based on the configuration information. For another example, the network device may send downlink data to the terminal device, and the terminal device may receive the downlink data based on configuration information sent by the network device. Therefore, the gNB and the UE 1 to the UE 6 in FIG. 1 may form a communication system, and the satellite site and the UE 7 to the UE 9 in FIG. 1 may form another communication system. In addition, the base station and the satellite site are connected to a core network device in different manners, and both may send data to or receive data from the core network device. In this architecture, there may be a plurality of satellite sites or a plurality of base stations, and the satellite site may also serve a UE similar to the UE 1 to the UE 6. This is not limited in this application. A plurality of antennas may be configured for each communication device, for example, the base station, the satellite site, or the UE 1 to the UE 9. The plurality of antennas may include at least one transmit antenna configured to send a signal and at least one receive antenna configured to receive a signal. In addition, each communication device further additionally includes a transmitter chain and a receiver chain. A person of ordinary skill in the art may understand that both the transmitter chain and the receiver chain may include a plurality of components (for example, a processor, a modulator, a multiplexer, a demodulator, a demultiplexer, or an antenna) related to signal sending and receiving. Therefore, the base station may communicate with the UE 11 to the UE 6 by using a multiple-antenna technology, and the satellite site may communicate with the UE 7 to the UE 9 by using the multiple-antenna technology.

In another example, terminal devices in the communication system 100, for example, the UE 4 to the UE 6, may also form a communication system. For example, links between the UE 5 and the UE 4 and between the UE 5 and the UE 6 may be referred to as sidelinks (sidelinks). For example, the UE 5 may control the UE 4 and the UE 6 to execute corresponding instructions. This is not limited in this application.

It should be further understood that FIG. 1 is merely a simplified diagram of an example for ease of understanding. The communication system 100 may further include another network device or another terminal device that is not shown in FIG. 1.

It should be understood that the network device in the wireless communication system may be any device having a wireless transceiver function. The device includes but is not limited to an evolved NodeB (evolved NodeB, eNB or eNodeB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), and the like. Alternatively, the device may be a gNB or a transmission point (TRP or TP) in a 5G system such as an NR system, may be one antenna panel or a group of antenna panels (including a plurality of antenna panels) of a base station in a 5G system, or may be a network node, such as a baseband unit (BBU) or a distributed unit (distributed unit, DU), that constitutes a gNB or a transmission point.

In some deployments, the gNB may include a central unit (central unit, CU) and a DU. The gNB may further include a radio unit (radio unit, RU). The CU implements some functions of the gNB, and the DU implements some functions of the gNB. For example, the CU implements functions of a radio resource control (radio resource control, RRC) layer and a packet data convergence protocol (packet data convergence protocol, PDCP) layer, and the DU implements functions of a radio link control (radio link control, RLC) layer, a media access control (media access control, MAC) layer, and a physical (physical, PHY) layer. Information at the RRC layer eventually becomes information at the PHY layer, or is converted from the information at the PHY layer. Therefore, in the architecture, higher layer signaling such as RRC layer signaling may also be considered as being sent by the DU or sent by the DU and the CU. It may be understood that the network device may be a CU node, a DU node, or a device including a CU node and a DU node. In addition, the CU may be classified into a network device in an access network (radio access network, RAN), or the CU may be classified into a network device in a core network (core network, CN). This is not limited in this application.

It should be further understood that the terminal device in the wireless communication system may also be referred to as a user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device in embodiments of this application may be a mobile phone (mobile phone), a tablet computer (pad), a computer having a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in embodiments of this application.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more computer operating systems that implement service processing through a process (process), for example, a Linux® operating system, a Unix® operating system, an Android® operating system, an iOS® operating system, or a Windows® operating system. The application layer includes applications such as a browser, an address book, word processing software, and instant messaging software. In addition, a specific structure of an execution entity of the communication method provided in embodiments of this application is not particularly limited in embodiments of this application, provided that a program that records code of the communication method provided in embodiments of this application can be run to perform communication according to the communication method provided in embodiments of this application. For example, the execution entity of the communication method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, contain, and/or carry instructions and/or data.

In a 4th generation (4th generation, 4G) system or a 5G communication system, in addition to sending data to the terminal device, the network device further needs to send DCI.

The data is from a higher layer of a communication protocol, and is usually transmitted on a PDSCH. Data sent by the user equipment to the network device is transmitted on a PUSCH.

The DCI is signaling used by the network device to control behavior of the terminal device. For example, the DCI may include scheduling signaling, power control signaling, and frame structure indication signaling. The DCI is usually transmitted on a physical downlink control channel (physical downlink control channel, PDCCH).

A most common scenario is that the DCI may carry scheduling signaling. The scheduling signaling is for scheduling the terminal device to send uplink data, or the scheduling signaling is for notifying the terminal device that downlink data is to be sent. The scheduling signaling may further indicate a location of a time-frequency resource used for uplink and downlink data transmission, a modulation and coding scheme, and the like. In this way, the terminal device first receives the DCI on the PDCCH, and then sends or receives data based on an indication in the scheduling signaling carried in the DCI.

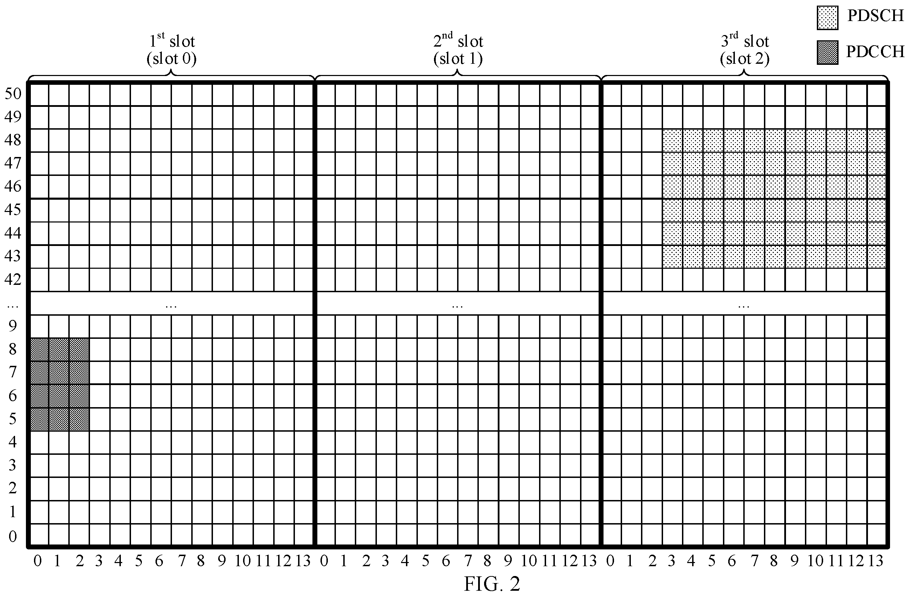

FIG. 2 is a diagram of an example of distribution of a PDCCH and a PDSCH on one carrier.

For example, as shown in FIG. 2, the carrier (cell) is divided into 51 RBs in frequency domain, namely, RBs numbered 0 to 50 in a vertical direction shown in FIG. 2. In addition, FIG. 2 shows three slots (slots) of the carrier (cell) in time domain, namely, a first slot (slot 0), a second slot (slot 1), and a third slot (slot 2) shown in FIG. 2. Each slot is further divided into 14 OFDM symbols, namely, OFDM symbols numbered 0 to 13 in a horizontal direction shown in FIG. 2.

In a common resource allocation form, the first three OFDM symbols in one slot are used as PDCCH resources, the PDCCH resources are for sending DCI, and the remaining OFDM symbols in the slot are used as resources for data sending. For example, as shown in FIG. 2, the PDCCH resources occupied by the DCI include: the first three OFDM symbols in the 1st slot (slot 0) in time domain, and RBs numbered 5 to 8 in frequency domain. In other words, the PDCCH resources occupied by the DCI occupy a length of three OFDM symbols in time domain, and occupy a length of four RBs in frequency domain.

It should be noted that the PDCCH resources and PDSCH resources shown in FIG. 2 are merely examples, and should not constitute a limitation on this application.

In an example, the scheduling signaling may carry a transmission parameter of the PDSCH, for example, time information and frequency information of the PDSCH and a modulation and coding scheme used by the PDSCH.

For example, the time information of the PDSCH may include a difference $K_0$ between a slot occupied by the DCI and a slot occupied by the PDSCH. As shown in FIG. 2, the slot occupied by the DCI is the 1st slot (namely, the slot 0), and the slot occupied by the PDSCH is the 3rd slot (namely, the slot 2). Herein, the difference between the slot occupied by the DCI and the slot occupied by the PDSCH is 2, that is, $K_0=2$.

In this way, the terminal device may calculate, according to Formula (1), the slot occupied by the PDSCH:

$$n_{PDSCH} = \left\lfloor n \frac{2^{\mu_{PDSCH}}}{2^{\mu_{PDCCH}}} \right\rfloor + K_0 \tag{1}$$

$n_{PDSCH}$ represents a number of the slot occupied by the PDSCH, $n$ represents a number of a sending slot of the DCI, $\mu_{PDSCH}$ represents a number of a subcarrier spacing used by the PDSCH for OFDM modulation, and $\mu_{PDCCH}$ represents a number of a subcarrier spacing used by the PDCCH for OFDM modulation.

Table 1 lists a correspondence between a subcarrier spacing and a number.

**Table 1**

| Subcarrier spacing | $\mu$ |
|---|---|
| 15 kHz | 0 |
| 30 kHz | 1 |
| 60 kHz | 2 |
| 120 kHz | 3 |
| 240 kHz | 4 |

It can be learned from Table 1 that, if both the subcarrier spacing used by the PDSCH for OFDM modulation and the subcarrier spacing used by the PDCCH for OFDM modulation are 30 kHz, $\mu_{PDSCH}=1$, and $\mu_{PDCCH}=1$. In addition, it can be learned from FIG. 2 that in Formula (1), $n=0$, and $K_0=2$. In this way, according to Formula (1), it can be learned that $n_{PDSCH}=2$, that is, the number of the slot occupied by the PDSCH is 2 (that is, the 3rd slot).

In addition, the time information of the PDSCH may further include a start location and length of OFDM symbols used by the PDSCH. For example, as shown in FIG. 2, the DCI further indicates that a start location S of the OFDM symbols used by the PDSCH is 3, and a length L of the OFDM symbols is 11. In other words, a start symbol of the OFDM symbols used by the PDSCH is an OFDM symbol numbered 3, and the PDSCH occupies 11 OFDM symbols starting from the OFDM symbol numbered 3.

For example, the frequency information of the PDSCH may include frequency locations occupied by the PDSCH. For example, as shown in FIG. 2, the frequency locations occupied by the PDSCH are RBs numbered 43 to 48.

For example, the modulation and coding scheme used by the PDSCH may include: quadrature amplitude modulation (16 quadrature amplitude modulation, 16QAM) with a used code rate of 1/3 and a used order of 16.

In this way, after receiving the DCI, the terminal device receives data on a corresponding PDSCH resource based on the transmission parameter that is of the PDSCH and that is indicated by the DCI.

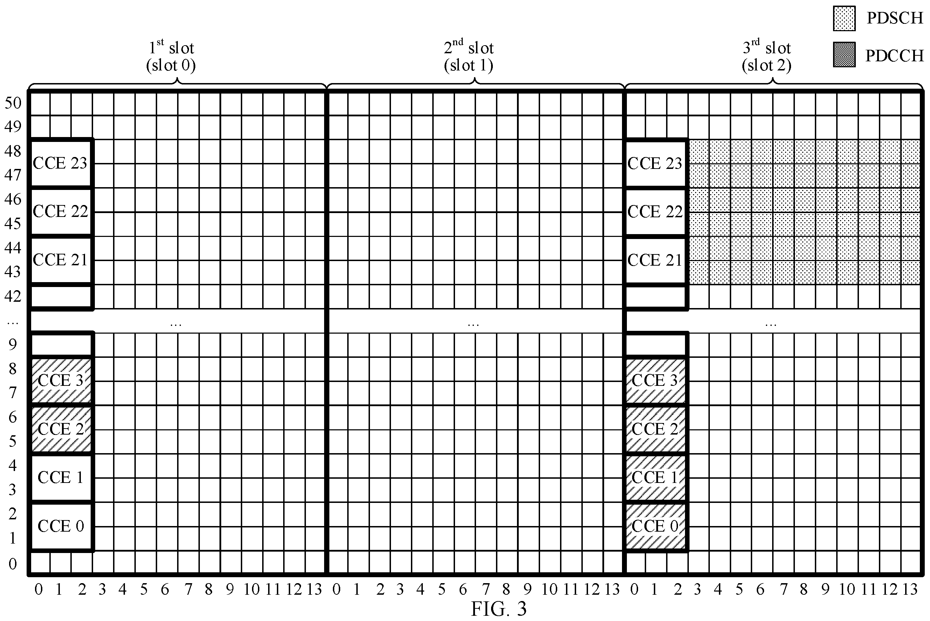

Before the network device transmits the DCI to the terminal device, the network device needs to configure a resource used for transmitting the DCI, that is, a control resource set (control resource set, CORESET). Usually, the network device sends CORESET configuration information to the terminal device. For example, the CORESET configuration information may include a quantity of RBs occupied by the CORESET and a quantity of OFDM symbols occupied by the CORESET. For example, as shown in FIG. 3, the CORESET occupies RBs numbered 1 to 48 in frequency domain, and the CORESET occupies three OFDM symbols in time domain.

It should be noted that the network device may configure a plurality of CORESETs for each bandwidth part (bandwidth part) of each cell.

In one CORESET, resources in the CORESET are divided into a plurality of CCEs, and each CCE occupies a specific time domain resource and a specific frequency domain resource. For example, as shown in FIG. 3, the resources in the CORESET are divided into 24 CCEs, and one CCE occupies three OFDM symbols in time domain and occupies two RBs in frequency domain. In an NR system, 108 bits may be transmitted on each CCE.

In a process of sending the DCI to the terminal device, the network device may include the DCI in different quantities of CCEs. For example, in NR, the network device may use one, two, four, eight, or 16 CCEs to carry the DCI. A quantity of CCEs carrying one piece of DCI may be referred to as a convergence level or an aggregation level (aggregation level, AL). It should be understood that the following uses an aggregation level as an example for description.

Usually, the network device selects the AL based on an information size of DCI that needs to be transmitted, a channel condition, and the like. For example, if a transmission condition of the terminal device is good, the network device may send the DCI at a lower AL (for example, 2). In this way, a smaller quantity of resources may be used to send the DCI. If a transmission condition of the terminal device is poor, the network device needs to send the DCI at a larger AL (for example, 16). In this way, although resource overheads are higher, more bits can be correspondingly transmitted. Therefore, a code rate of channel encoding can be reduced, and it can be ensured that the DCI is successfully demodulated at a lower signal-to-noise ratio. Usually, better demodulation performance may be achieved at a higher AL, but resource overheads are correspondingly increased.

For example, as shown in FIG. 3, in the slot 0, the network device sends DCI at an AL of 2, and there are two CCEs (a CCE 2 and a CCE 3) carrying the DCI. In the slot 2, the network device sends DCI at an AL of 4, and there are four CCEs (a CCE 0, a CCE 1, a CCE 2, and a CCE 3) carrying the DCI. In addition, time information that is of a PDSCH and that is indicated by the DCI sent in the slot 0 or the slot 2 may include that a start location S of OFDM symbols used by the PDSCH is 3 and a length L of the OFDM symbols is 11. In other words, a start symbol of the OFDM symbols used by the PDSCH is an OFDM symbol numbered 3, and the PDSCH occupies 11 OFDM symbols starting from the OFDM symbol numbered 3. Frequency information that is of the PDSCH and that is indicated by the DCI may include RBs that are occupied by the PDSCH and whose frequency locations are numbered 43 to 48.

When the network device sends the DCI, specific CCEs in a CORESET and a specific AL that are used to send the DCI may change on each PDCCH monitoring occasion (monitoring occasion). Therefore, to receive the DCI sent to the terminal device, the terminal device needs to attempt to receive the DCI at different CCE locations in the CORESET based on different ALs. This process is referred to as PDCCH blind detection (blind detection).

To prevent the terminal device from traversing all possible CCE locations and ALs, the network device first sends search space (search space) configuration information to the terminal device, to reduce a quantity of blind detections performed by the terminal device. Usually, the search space configuration information includes the following three parts:

(1) CORESET corresponding to search space, that is, CORESET on which the search space is searched

Because the network device may configure a plurality of CORESETs for the terminal device, the network device needs to configure, for the terminal device, a CORESET for which the search space configuration information is specific.

(2) Periodicity of the search space

For example, the periodicity of the search space may be configured as two slots, that is, the search space is searched once every two slots.

(3) Quantity of detections in the search space at each AL

For example, the network device may configure AL1:10/AL2:8/AL4:8/AL8:4/AL16:2. In other words, the terminal device performs 10 blind detections based on AL1, performs eight blind detections based on AL2, performs eight blind detections based on AL4, performs four blind detections based on AL8, and performs two blind detections based on AL16. In this way, the terminal device needs to perform 32 blind detections in total on each PDCCH monitoring occasion.

It should be noted that, first, ALX may be understood as that an AL used by the DCI is X, where X is $2^m$, and m is an integer greater than or equal to 0. For example, AL1 may be understood as that the used AL is 1. For another example, AL2 may be understood as that the used AL is 2.

Second, a quantity of detections at the AL configured by the network device is determined based on a value of the AL and a quantity of CCEs on one PDCCH monitoring occasion. A product of the quantity of detections at the AL and the value of the AL does not exceed the quantity of CCEs on one PDCCH monitoring occasion. In this way, as shown in the foregoing example in (3), the quantity of CCEs on one PDCCH monitoring occasion is greater than or equal to 32.

When sending the DCI, the network device needs to first encode and modulate the DCI, and then map DCI obtained through encoding and modulation to an allocated PDCCH resource for sending.

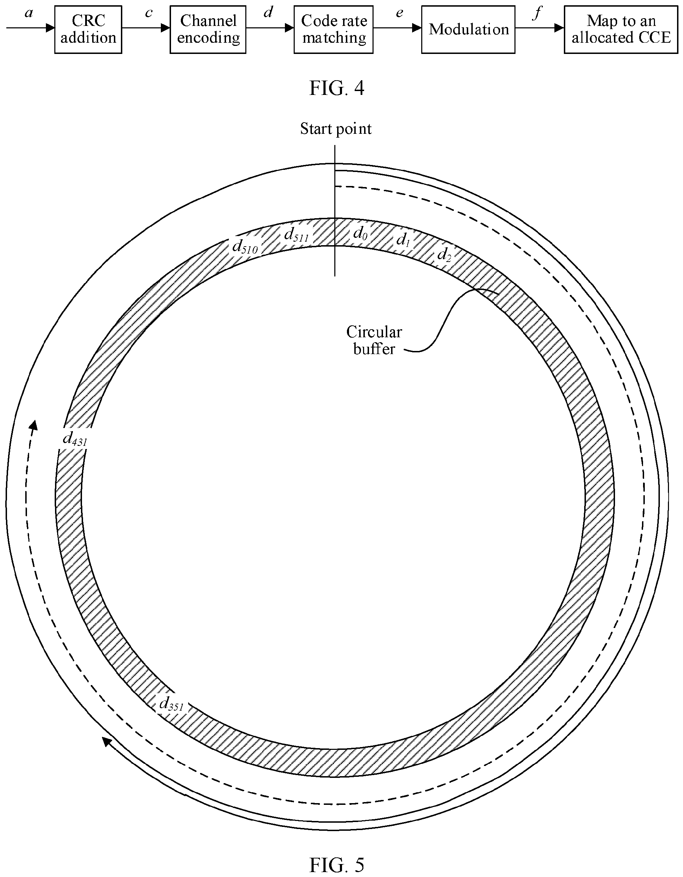

FIG. 4 is a schematic flowchart of an example of DCI processing according to this application.

DCI is a bit sequence of a specific length. For example, the length of the DCI is 50 bits, and the bit sequence may be represented as $a$= {0, 1, 1, 0, 1, 0, ..., 1}. Refer to FIG. 4. Step 1: Add a cyclic redundancy check (cyclic redundancy check, CRC) bit to the end of the bit sequence $a$ of the DCI, to obtain a to-be-sent sequence $c$.

For example, first, the original bit sequence $a$ of the DCI is calculated according to a calculation formula, to obtain a CRC sequence whose length is 24 bits. Then, an exclusive OR operation is performed on the CRC sequence and a radio network temporary identifier (radio network temporary identifier, RNTI) of the terminal device (the terminal device receiving the DCI), to obtain a final check bit sequence $a_{CRC}$. After the terminal device accesses a network, the network device allocates an RNTI to the terminal device, where a length of the RNTI is 24 bits. Finally, the network device adds the final check bit sequence $a_{CRC}$ to the end of the original bit sequence $a$ of the DCI, to be used as the to-be-sent sequence $c$. $c$=[$a$, $a_{CRC}$], and a length of $c$ is a sum of the length of $a$ (50 bits) and the length of $a_{CRC}$ (24 bits), that is, the length of c is 74 bits. In this way, the terminal device may recalculate, based on a received information bit, the check bit according to a calculation formula the same as that used by the network device, and then perform an exclusive OR operation on the check bit and a received check bit, to obtain a sequence. If an RNTI of the obtained sequence is the same as the RNTI of the terminal device, the terminal device determines that the received DCI is sent to the terminal device.

Step 2: Perform channel encoding on the to-be-sent sequence c to obtain a sequence $d$.

For example, an encoder is used to perform channel encoding on the to-be-sent sequence c. In a 5G system, a control channel encoder usually uses a Polar code. In a channel encoding process, to increase a decoding success rate of information in a low signal-to-noise ratio condition, redundant information is usually introduced. In this case, a sequence length after the encoding is greater than a sequence length before the encoding. For example, if the sequence c is input into the encoder, the sequence $d$ whose length is 512 bits may be output.

Step 3: Perform code rate matching on the sequence $d$ based on an AL used by the DCI, to obtain a sequence $e$.

For example, the sequence $d$ obtained through channel encoding is placed in a circular buffer (circular buffer), and the bit sequence obtained through encoding is truncated or repeated based on a quantity of bits that can be carried in a CCE allocated to the DCI, so that a length of a bit sequence obtained through code rate matching is the same as a length of the bits that can be carried in the CCE.

For example, the circular buffer shown in FIG. 5 may store 512-bit data. Therefore, the circular buffer is full of elements in the sequence $d$.

If the AL used by the DCI is 4, four CCEs may carry 432 bits (108×4 bits). Based on this, because the length of the sequence $d$ is 512 bits, in a part shown by a dashed line arrow in FIG. 5, the first 432 bits of the sequence $d$ stored in the circular buffer need to be truncated for sending. In this case, a length of the sequence $e$ is 432 bits, and is less than the length of the sequence $d$.

If the AL used by the DCI is 8, eight CCEs may carry 864 bits (108×8 bits). Based on this, because the length of the sequence $d$ is 512 bits, in a part shown by a solid line arrow in FIG. 5, in addition to all 512 bits of the sequence $d$ stored in the circular buffer, the first 352 bits of the sequence $d$ stored in the circular buffer need to be transmitted again. In this way, the 864 transmitted bits can be exactly placed in the eight CCEs. In this case, a length of the sequence e is 864 bits, and is greater than the length of the sequence $d$.

Step 4: Modulate the sequence e to obtain a sequence $f$.

In a 5G NR system, a sequence is usually modulated by using a quadrature phase shift keying (quadrature phase shift keying, QPSK) modulation scheme.

Step 5: Map the sequence $f$ to the allocated CCE, and send the sequence $f$ together with other information.

Through the foregoing five steps, the network device may send the DCI to the terminal device.

In some mobile communication application scenarios, a communication capability of the terminal device is not necessarily strong, but cost control for the terminal is more important. For example, a wearable device, a kids phone watch, or the like has a much lower requirement on a communication capability than a normal terminal device (which may also be referred to as a terminal device with a strong communication capability or a non-reduced capability terminal device, such as a mobile phone). In a 5G network, this type of terminal device is referred to as a reduced capability user equipment.

For the reduced capability user equipment, a design specification of a communication capability of the reduced capability user equipment is usually reduced. For example, a communication bandwidth that can be supported and a quantity of antennas that can be supported are reduced, to achieve an objective of reducing costs and device complexity. For example, a normal 5G mobile phone needs to support a communication bandwidth of 100 MHz and four receive antennas, but the reduced capability user equipment may need to support only a communication bandwidth of 20 MHz or 5 MHz and one receive antenna.

Because complexity and costs of the reduced capability user equipment are low, the reduced capability user equipment can meet requirements of many communication scenarios, and therefore is in high demand in some industry fields.

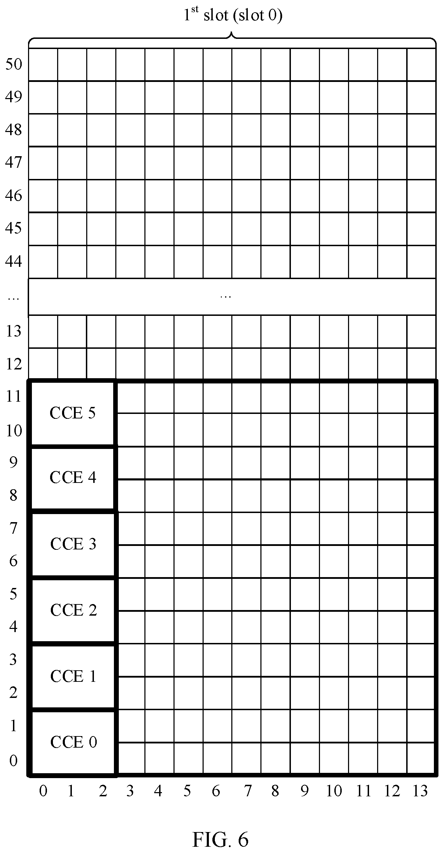

However, because the communication bandwidth supported by the reduced capability user equipment is narrow, one CORESET may fail to accommodate one piece of DCI. For example, as shown in FIG. 6, in a system with a 30 kHz subcarrier spacing, the reduced capability user equipment with the 5 MHz communication bandwidth can support reception of DCI only on 12 RBs (for example, RBs numbered 0 to 11 in FIG. 6). In this way, one CORESET occupies a maximum of 12 RBs in frequency domain. For example, as shown in FIG. 6, if one CCE occupies three OFDM symbols in time domain and occupies two RBs in frequency domain, one CORESET includes a maximum of six complete CCEs. In this case, if the network device still performs DCI transmission at an AL of 8 or 16, one CORESET cannot accommodate the DCI. If DCI transmission is performed forcibly at an AL of 2 or 4, when a channel condition is poor, demodulation performance of the reduced capability user equipment for the DCI cannot meet a requirement.

To prevent the demodulation performance of the reduced capability user equipment for the DCI from being reduced, the network device may map a plurality of CCEs carrying one piece of DCI to a plurality of PDCCH monitoring occasions. In this way, even if the narrow communication bandwidth causes a problem of an insufficient CORESET capacity, the network device may support DCI transmission at a high AL on a plurality of PDCCH monitoring occasions, to ensure that the reduced capability user equipment has good demodulation performance for the DCI.

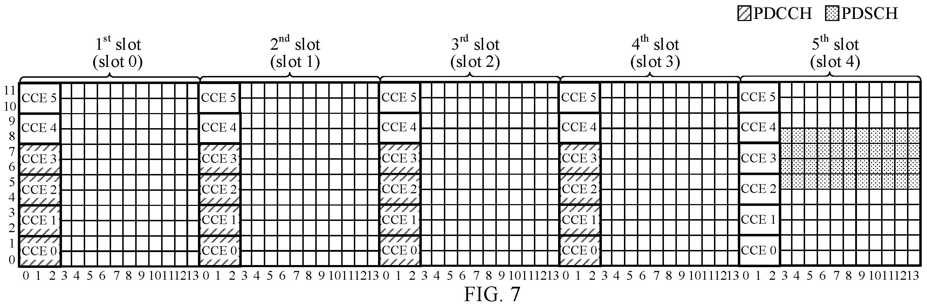

For example, if the DCI is sent at an AL of 16, but one CORESET can accommodate a maximum of six CCEs, the DCI may be sent on four PDCCH monitoring occasions dispersedly. As shown in FIG. 7, a 1st PDCCH monitoring occasion is the first three OFDM symbols in a 1st slot (slot 0), a 2nd PDCCH monitoring occasion is the first three OFDM symbols in a 2nd slot (slot 1), a 3rd PDCCH monitoring occasion is the first three OFDM symbols in a 3rd slot (slot 2), and a 4th PDCCH monitoring occasion is the first three OFDM symbols in a 4th slot (slot 3). In this case, the network device sends, on CCEs 0 to 3 on the 1st PDCCH monitoring occasion, content carried in 0th to 3rd CCEs corresponding to the DCI; the network device sends, on CCEs 0 to 3 on the 2nd PDCCH monitoring occasion, content carried in 4th to 7th CCEs corresponding to the DCI; the network device sends, on CCEs 0 to 3 on the 3rd PDCCH monitoring occasion, content carried in 8th to 11th CCEs corresponding to the DCI; and the network device sends, on CCEs 0 to 3 on the 4th PDCCH monitoring occasion, content carried in 12th to 15th CCEs corresponding to the DCI.

In addition, to prevent the demodulation performance of the reduced capability user equipment for the DCI from being reduced, the network device may still send the DCI at a low AL, so that the DCI may be carried in one CORESET. In this case, the network device may repeatedly send the DCI for a plurality of times to compensate for the demodulation performance for the DCI.

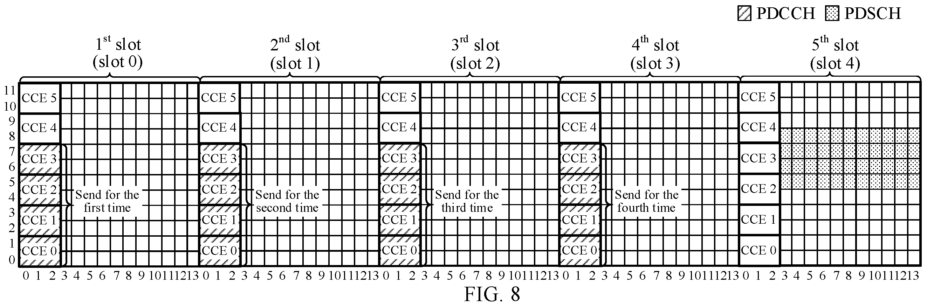

For example, as shown in FIG. 8, a 1st PDCCH monitoring occasion is the first three OFDM symbols in a 1st slot (slot 0), a 2nd PDCCH monitoring occasion is the first three OFDM symbols in a 2nd slot (slot 1), a 3rd PDCCH monitoring occasion is the first three OFDM symbols in a 3rd slot (slot 2), and a 4th PDCCH monitoring occasion is the first three OFDM symbols in a 4th slot (slot 3). In this case, the network device includes the DCI in CCEs 0 to 3 on the 1st monitoring occasion for sending for the first time, includes the DCI in CCEs 0 to 3 on the 2nd monitoring occasion for sending for the second time, includes the DCI in CCEs 0 to 3 on the 3rd monitoring occasion for sending for the third time, and includes the DCI in CCEs 0 to 3 on the 4th monitoring occasion for sending for the fourth time.

It should be noted that, in this application, a value of the AL may be evaluated based on a quantity of CCEs accommodated in one CORESET. For example, an AL that is less than or equal to a maximum quantity of CCEs accommodated in one CORESET may be referred to as a low AL, and an AL that is greater than the maximum quantity of CCEs accommodated in one CORESET may be referred to as a high AL. In the foregoing solution, one piece of DCI is transmitted based on a higher convergence level and a larger quantity of repetitions, to improve the demodulation performance of the reduced capability user equipment. However, because four slots are occupied for sending the DCI, the reduced capability user equipment cannot directly reuse a technology in which a non-reduced capability terminal device (normal user equipment) determines a slot occupied by a PDSCH. Specifically, as shown in FIG. 7 or FIG. 8, because the slots for sending the DCI include four slots in total, namely, the slot 0 to the slot 3, the reduced capability user equipment cannot determine which one of the slots 1 to 4 is used for sending the DCI, that is, cannot determine a value of n in Formula (1). Therefore, the reduced capability user equipment cannot calculate, according to Formula (1), a slot occupied by the PDSCH, and the reduced capability user equipment cannot receive data sent by the network device.

Based on this, an embodiment of this application provides a communication method. In the communication method, the reduced capability user equipment may still use the technology in which the non-reduced capability terminal device determines the slot occupied by the PDSCH. In this way, the reduced capability user equipment may receive the data sent by the network device.

It should be noted that a terminal device described in the following communication method is a reduced capability user equipment. In addition, the following communication method is described by using a communication system including the terminal device and a network device as an example. This is not limited in this application. For example, the communication method provided in this application may alternatively be applied to a communication system including two terminal devices. In this case, one of the two terminal devices may perform steps performed by the network device in the following communication method, and the other terminal device may perform steps performed by the terminal device in the following communication method.

The following describes the communication method provided in embodiments of this application with reference to the accompanying drawings.

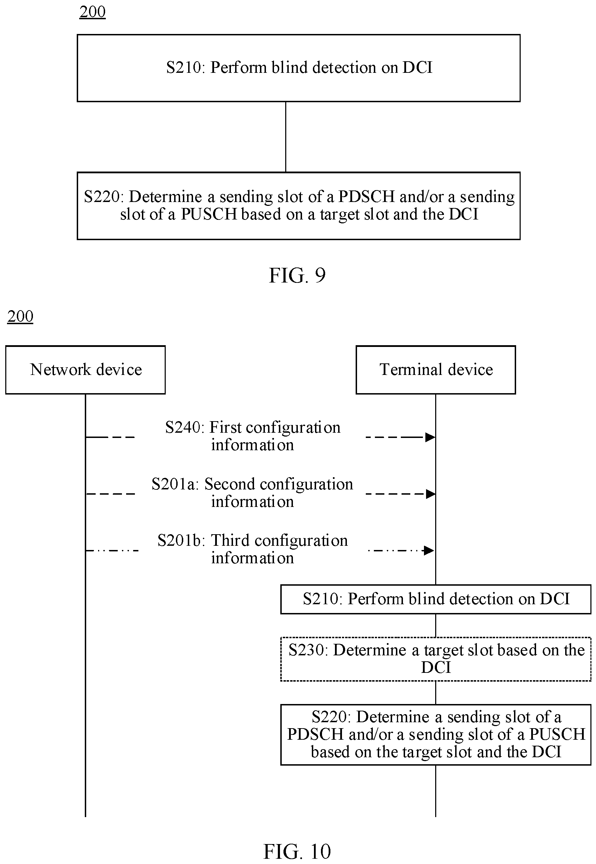

FIG. 9 is a schematic flowchart of an example of a communication method 200 according to an embodiment of this application.

For example, as shown in FIG. 9, the communication method 200 includes S210 and S220. The following describes S210 and S220 in detail.

S210: A terminal device performs blind detection on DCI.

Correspondingly, a network device sends the DCI.

S220: The terminal device determines a sending slot of a PDSCH and/or a sending slot of a PUSCH based on a target slot and the DCI.

The target slot is one of a plurality of slots that carry the DCI.

In an example, the plurality of slots are for transmitting one piece of DCI. In this case, the piece of DCI is transmitted in the plurality of slots, and the target slot is one of the plurality of slots that carry the piece of DCI.

For example, as shown in FIG. 7, one piece of DCI is sequentially carried in the $1^{st}$ slot (slot 0), the $2^{nd}$ slot (slot 1), the $3^{rd}$ slot (slot 2), and the $4^{th}$ slot (slot 3). In other words, the four slots are for transmitting the piece of DCI. In this way, the target slot is one of the $1^{st}$ slot (slot 0), the $2^{nd}$ slot (slot 1), the $3^{rd}$ slot (slot 2), and the $4^{th}$ slot (slot 3).

In another example, each of the plurality of slots is for transmitting the same piece of DCI. In this case, the same piece of DCI is repeatedly transmitted in the plurality of slots for a plurality of times, and the target slot is one of the plurality of slots that carry the same piece of DCI.

For another example, as shown in FIG. 8, the same piece of DCI is repeatedly transmitted for four times in the $1^{st}$ slot (slot 0), the $2^{nd}$ slot (slot 1), the $3^{rd}$ slot (slot 2), and the $4^{th}$ slot (slot 3) sequentially. In other words, each of the four slots is for transmitting the same piece of DCI. In this way, the target slot is one of the $1^{st}$ slot (slot 0), the $2^{nd}$ slot (slot 1), the $3^{rd}$ slot (slot 2), and the $4^{th}$ slot (slot 3).

In this embodiment of this application, the target slot may be a slot corresponding to n in Formula (1). To be specific, when there are a plurality of slots that carry one piece of DCI or the same piece of DCI is repeatedly transmitted in the plurality of slots for a plurality of times, a number corresponding to the target slot may be used as the number n of the sending slot of the DCI in Formula (1).

That the target slot is one of the plurality of slots that carry the DCI may be that the target slot is any one of the plurality of slots that carry the DCI.

It should be noted that the network device may still include, in the DCI, a difference $K_0$ between a slot for sending the DCI and a slot occupied by the PDSCH, so that the terminal device may determine, according to Formula (1), the slot occupied by the PDSCH.

For example, the target slot is an $n_1^{th}$ slot in the plurality of slots that carry the DCI. In this way, n in Formula (1) is a slot number corresponding to the $n_1^{th}$ slot in the plurality of slots. $n_1$ is a positive integer less than or equal to m, and m is a quantity of slots that carry the DCI, that is, a quantity of the plurality of slots.

In an example, when $n_1$ is equal to 1, the target slot is a $1^{st}$ slot in the plurality of slots that carry the DCI.

For example, as shown in FIG. 7, the target slot may be the $1^{st}$ slot (slot 0) shown in FIG. 7. In this case, n in Formula (1) is 0, and $K_0$ in Formula (1) indicated by the DCI is 4. In this case, if $\mu_{PDSCH}$=1, and $\mu_{PDCCH}$=1, it can be learned from Formula (1) that $n_{PDSCH}$ =4, that is, the slot occupied by the PDSCH is a slot numbered 4, that is, a $5^{th}$ slot (slot 4) shown in FIG. 7.

For another example, as shown in FIG. 8, the target slot may be the $1^{st}$ slot (slot 0) shown in FIG. 8. In this case, n in Formula (1) is 0, and $K_0$ in Formula (1) indicated by the DCI is 4. In this case, if $\mu_{PDSCH}$=1, and $\mu_{PDCCH}$=1, it can be learned from Formula (1) that $n_{PDSCH}$ =4, that is, the slot occupied by the PDSCH is a slot numbered 4, that is, a $5^{th}$ slot shown in FIG. 8.

In another example, when $n_1$ is equal to m, the target slot is a last slot in the plurality of slots that carry the DCI.

For example, as shown in FIG. 7, the target slot may be the $4^{th}$ slot shown in FIG. 7. In this case, n in Formula (1) is 3, and $K_0$ in Formula (1) indicated by the DCI is 1. In this case, if $\mu_{PDSCH}$=1, and $\mu_{PDCCH}$=1, it can be learned from Formula (1) that $n_{PDSCH}$ =4, that is, the slot occupied by the PDSCH is a slot numbered 4, that is, a $5^{th}$ slot shown in FIG. 7.

For another example, as shown in FIG. 8, the target slot may be the $4^{th}$ slot shown in FIG. 8. In this case, n in Formula (1) is 3, and $K_0$ in Formula (1) indicated by the DCI is 1. In this case, if $\mu_{PDSCH}$=1, and $\mu_{PDCCH}$=1, it can be learned from Formula (1) that $n_{PDSCH}$ =4, that is, the slot occupied by the PDSCH is a slot numbered 4, that is, a $5^{th}$ slot shown in FIG. 8.

In addition, the target slot is preconfigured. In this case, as shown in FIG. 10, the communication method 200 may further include S230. S230 is performed between S210 and S220. The following describes S230 in detail.

S230: The terminal device determines the target slot based on the DCI. In other words, the terminal device determines the target slot based on the DCI blindly detected in S210.

A manner of preconfiguring the target slot is not limited in this application. How to preconfigure the target slot is described below by using Manner 1, Manner 2, and Manner 3 as examples.

Manner 1: A rule for determining the target slot is preset or predefined.

In this case, S230 specifically includes: The terminal device determines the target slot based on the DCI and the preset or predefined rule for determining the target slot.

For example, the target slot may be preset or predefined as the $n_1^{th}$ slot in the plurality of slots. In this way, the terminal device determines the $n_1$th slot in the plurality of slots as the target slot based on the preset or predefined rule for determining the target slot.

A preset or predefined manner is not limited in embodiments of this application. For example, the manner may be specified in a communication standard protocol or defined in a standard.

Manner 2: The network device configures a rule for determining the target slot, and notifies the terminal device of the rule for determining the target slot.

In this case, S230 specifically includes: The terminal device determines the target slot based on a configuration of the network device and the DCI.

In this example, as shown in FIG. 10, the communication method 200 further includes S240. S240 is performed before S230. An execution sequence of S240 and S210 is not limited in embodiments of this application. The following describes S240 in detail.

S240: The network device sends first configuration information to the terminal device. Correspondingly, the terminal device receives the first configuration information from the network device. In this way, the terminal device determines the target slot based on the first configuration information and the DCI.

The first configuration information may directly indicate the target slot. Alternatively, the first configuration information may be for determining the target slot.

A manner of using the first configuration information to determine the target slot is not limited in this application.

In an example, the first configuration information includes a first field, the first field includes one or more bits, and the one or more bits indicate the rule for determining the target slot.

For example, when the one or more bits of the first field in the first configuration information indicate a first state, the rule for determining the target slot may be understood as determining the 1st slot in the plurality of slots as the target slot; or when the one or more bits of the first field in the first configuration information indicate a second state, the rule for determining the target slot may be understood as determining a 2nd slot in the plurality of slots as the target slot; ...; or when the one or more bits of the first field in the first configuration information indicate an $n_1$th state, the rule for determining the target slot may be understood as determining the $n_1$th slot in the plurality of slots as the target slot; ...; or when the one or more bits of the first field in the first configuration information indicate an mth state, the rule for determining the target slot may be understood as determining the last slot in the plurality of slots as the target slot.

Manner 3: The network device determines the target slot based on a rule for determining the target slot, and notifies the terminal device of the target slot.

How the network device learns of the rule for determining the target slot is not limited in embodiments of this application. For example, the rule for determining the target slot may be preset.

Based on the descriptions of the communication method 200, as shown in FIG. 7, when one piece of DCI is transmitted in a plurality of slots, or as shown in FIG. 8, when the same piece of DCI is repeatedly transmitted in each of a plurality of slots, the terminal device may determine the sending slot n of the DCI in Formula (1), and the terminal device may still determine, according to Formula (1), the slot occupied by the PDSCH and/or the slot occupied by the PUSCH.

With reference to the descriptions of DCI encoding and modulation, in existing encoding and code rate matching mechanisms, the terminal device may successfully demodulate the DCI via some CCEs carrying the DCI.

For example, if the network device encodes the DCI at an AL of 16, a sequence whose length is 1728 bits (108×16 bits) may be obtained; or if the network device encodes the same piece of DCI at an AL of 8, a sequence whose length is 864 bits (108×8 bits) may be obtained. In this way, in the existing encoding and code rate matching mechanisms, when the network device uses a same encoder and a same circular buffer, a 1st bit to the first 864 bits of a bit sequence obtained by performing encoding and code rate matching on DCI that uses the AL of 16 are completely the same as a 1st bit to the first 864 bits of a bit sequence obtained by performing encoding and code rate matching on DCI that uses the AL of 8. Therefore, in a process in which the terminal device performs blind detection on the DCI, the terminal device may also successfully decode, based on the AL of 8, the first eight CCEs of the DCI that uses the AL of 16. In this case, the terminal device incorrectly considers that the network device sends the DCI at the AL of 8. Consequently, the terminal device incorrectly determines the foregoing target slot.

For example, as shown in FIG. 7, it is assumed that an AL actually used by the network device to send the DCI is 16, and the DCI is sent in four slots (the slot 0, the slot 1, the slot 2, and the slot 3 shown in FIG. 7). In the process of performing blind detection on the DCI, if the terminal device successfully decodes content carried in CCEs in the first two slots (CCEs 0 to 3 in the slot 0 and CCEs 0 to 3 in the slot 1), the terminal device incorrectly considers that the AL used by the DCI is 8, and slots occupied by the DCI are the slot 0 and the slot 1 shown in FIG. 7. If the first configuration information sent by the network device to the terminal device indicates that the target slot of the DCI is the last slot that carries the DCI, the terminal device considers that the target slot is the slot 1, that is, n=1. However, in an actual situation, as described above, n should be 3 in this case.

For example, if the network device encodes the DCI at an AL of 4, a sequence whose length is 432 bits (108×4 bits) may be obtained; or if the network device encodes the same piece of DCI still at an AL of 4, and the DCI is repeatedly transmitted for four times in different slots, the 432-bit information is transmitted each time. Therefore, in a process in which the terminal device performs blind detection on the DCI, the terminal device may also successfully decode, based on the AL of 4, the first four CCEs of the DCI that uses the AL of 4 and that is repeatedly transmitted for four times. In this case, the terminal device incorrectly considers that the network device sends the DCI at the AL of 4, and does not know that the DCI is repeatedly transmitted for a plurality of times. Consequently, the terminal device incorrectly determines the foregoing target slot.

For example, as shown in FIG. 8, it is assumed that an AL actually used by the network device to send the DCI is 4, and the DCI is repeatedly sent for four times in four slots (the slot 0, the slot 1, the slot 2, and the slot 3 shown in FIG. 8). In the process of performing blind detection on the DCI, if the terminal device successfully decodes content carried in CCEs in the $1^{st}$ slot (CCEs 0 to 3 in the slot 0), the terminal device incorrectly considers that the AL used by the DCI is 4, and the slot occupied by the DCI is the slot 0 shown in FIG. 8. If the configuration information sent by the network device to the terminal device indicates that the target slot of the DCI is the last slot that carries the DCI, the terminal device considers that the target slot is the slot 0, that is, n=0. However, in an actual situation, as described above, n should be 3 in this case.

Further, based on the foregoing communication method 200, an embodiment of this application further provides some embodiments, for example, Embodiment 1 to Embodiment 5 described below, to avoid the case in which the terminal device incorrectly determines the target slot. These embodiments are described in detail below.

In Embodiment 1, to avoid confusion of aggregation levels of the DCI by the terminal device in the process of performing blind detection on the DCI, the network device may configure the terminal device to perform blind detection only at one aggregation level in the aggregation levels that may be confused, and set a quantity of blind detections at another aggregation level in the aggregation levels that may be confused to 0. In this way, in the process of performing blind detection on the DCI, the terminal device may perform blind detection only at one aggregation level in the aggregation levels that may be confused, and does not perform blind detection at the another aggregation level in the aggregation levels that may be confused.

In Embodiment 1, the target slot is the $n_1^{th}$ slot in the plurality of slots that carry the DCI. For example, the target slot is the last slot that carries the DCI; or the target slot is the $1^{st}$ slot that carries the DCI.

For example, in Embodiment 1, as shown in FIG. 10, the method 200 further includes S201a before S210. The following describes S201a in detail.

S201a: The network device sends second configuration information to the terminal device. Correspondingly, the terminal device receives the second configuration information sent from the network device, and the terminal device performs blind detection on DCI based on the second configuration information.

The second configuration information indicates a quantity of blind detections at a plurality of aggregation levels, the plurality of aggregation levels include a first aggregation level and a second aggregation level, a quantity of blind detections at the first aggregation level is 0, and a quantity of blind detections at the second aggregation level is not 0. In this way, in each detection periodicity, the terminal device does not perform blind detection on the DCI at the first aggregation level, and performs blind detection on the DCI only at the second aggregation level.

The first aggregation level is different from the second aggregation level, and a quantity of slots occupied by DCI that uses the first aggregation level is different from a quantity of slots occupied by DCI that uses the second aggregation level; or the first aggregation level is the same as the second aggregation level, and a quantity of repeated transmissions of DCI that uses the first aggregation level is different from a quantity of repeated transmissions of DCI that uses the second aggregation level. In this way, in each slot, the terminal device performs blind detection on the DCI only at the second convergence level, and does not perform blind detection on the DCI at the first convergence level. Naturally, the terminal device does not confuse the second aggregation level and the first aggregation level in the process of performing blind detection on the DCI.

For example, the first aggregation level may be 8, the second aggregation level may be 16, the quantity of slots occupied by the DCI that uses the first aggregation level is 2, and the quantity of slots occupied by the DCI that uses the second aggregation level is 4. Because the quantity of blind detections at the first aggregation level is 0, and the quantity of blind detections at the second aggregation level is not 0, the terminal device performs blind detection on the DCI only at the convergence level of 16, and does not perform blind detection on the DCI at the convergence level of 8. Naturally, the terminal device does not confuse the aggregation level of 16 and the aggregation level of 8 in the process of performing blind detection on the DCI.

Alternatively, the first aggregation level may be 16, the second aggregation level may be 8, the quantity of slots occupied by the DCI that uses the first aggregation level is 4, and the quantity of slots occupied by the DCI that uses the second aggregation level is 2. Because the quantity of blind detections at the first aggregation level is 0, and the quantity of blind detections at the second aggregation level is not 0, the terminal device performs blind detection on the DCI only at the convergence level of 8, and does not perform blind detection on the DCI at the convergence level of 16. Naturally, the terminal device does not confuse the aggregation level of 16 and the aggregation level of 8 in the process of performing blind detection on the DCI.

For another example, the first aggregation level may be 16, the second aggregation level may be 32, the quantity of slots occupied by the DCI that uses the first aggregation level is 4, and the quantity of slots occupied by the DCI that uses the second aggregation level is 8. Because the quantity of blind detections at the first aggregation level is 0, and the quantity of blind detections at the second aggregation level is not 0, the terminal device performs blind detection on the DCI only at the convergence level of 32, and does not perform blind detection on the DCI at the convergence level of 16. Naturally, the terminal device does not confuse the aggregation level of 16 and the aggregation level of 32 in the process of performing blind detection on the DCI.

Alternatively, the first aggregation level may be 32, the second aggregation level may be 16, the quantity of slots occupied by the DCI that uses the first aggregation level is 8, and the quantity of slots occupied by the DCI that uses the second aggregation level is 4. Because the quantity of blind detections at the first aggregation level is 0, and the quantity of blind detections at the second aggregation level is not 0, the terminal device performs blind detection on the DCI only at the convergence level of 16, and does not perform blind detection on the DCI at the convergence level of 32. Naturally, the terminal device does not confuse the aggregation level of 16 and the aggregation level of 32 in the process of performing blind detection on the DCI.

For another example, both the first aggregation level and the second aggregation level may be 4, both the quantity of slots occupied by the DCI that uses the first aggregation level and the quantity of slots occupied by the DCI that uses the second aggregation level are 1, and the DCI that uses the second aggregation level is repeatedly transmitted in four slots. Because the quantity of blind detections at the first aggregation level is 0, and the quantity of blind detections at the second aggregation level is not 0, the terminal device performs blind detection only on the same piece of DCI that is repeatedly transmitted in the four slots, and does not perform blind detection on DCI that is transmitted only in one slot. Naturally, the terminal device does not confuse AL4 and AL4×4 (that is, the aggregation level is 4, and the same piece of DCI is repeatedly transmitted for four times) in the process of performing blind detection on the DCI.

It should be noted that, in this example, first, specific values of the first aggregation level and the second aggregation level are merely examples, and should not constitute a limitation on this application. For example, the first aggregation level may alternatively be 4, and the second aggregation level may alternatively be 8. In this case, the quantity of slots occupied by the DCI that uses the first aggregation level is 1, and the quantity of slots occupied by the DCI that uses the second aggregation level is 2. For another example, both the first aggregation level and the second aggregation level may alternatively be 4. In this case, the quantity of slots occupied by the DCI that uses the first aggregation level is 1, and the quantity of slots occupied by the DCI that uses the second aggregation level is 2.

Second, a value of first aggregation levels is used as an example, and should not constitute a limitation on this application.

Third, in addition to the first aggregation level and the second aggregation level, the plurality of aggregation levels may further include another aggregation level, where the another aggregation level is different from the first aggregation level and the second aggregation level, and a quantity of blind detections at the another aggregation level is not 0. For example, the second configuration information may indicate that: when the aggregation level is 1 (an example of the another aggregation level), the quantity of blind detections is 10; when the aggregation level is 2 (another example of the another aggregation level), the quantity of blind detections is 8; when the aggregation level is 4 (still another example of the another aggregation level), the quantity of blind detections is 8; when the aggregation level is 8 (an example of the first aggregation level), the quantity of blind detections is 4; or when the aggregation level is 16 (an example of the second aggregation level), the quantity of blind detections is 0. For another example, the second configuration information may indicate that: when the aggregation level is 1 (an example of the another aggregation level), the quantity of blind detections is 10; when the aggregation level is 2 (another example of the another aggregation level), the quantity of blind detections is 8; when the aggregation level is 4 (still another example of the second aggregation level), the quantity of blind detections is 8; or when the aggregation level is 4 (an example of the first aggregation level), and the same piece of DCI is repeatedly transmitted for four times, the quantity of blind detections is 0.

Fourth, the network device may include the second configuration information and the first configuration information respectively in two separate messages, and send the two separate messages to the terminal device. Alternatively, the network device may include the second configuration information and the first configuration information in one message and send the message to the terminal device. In this case, a type of the message that carries the second configuration information and the first configuration information is not limited in this application. For example, the message may be a search space (search space) configuration message. Optionally, two fields may be newly added to the search space configuration message, and the two fields newly added respectively indicate content indicated by the second configuration information and content indicated by the first configuration information.

In Embodiment 2, to avoid confusion of aggregation levels of the DCI or quantities of repeated transmissions of the DCI by the terminal device in the process of performing blind detection on the DCI, the network device may include, in the DCI, timing periodicities of DCI corresponding to a plurality of aggregation levels. In this way, in the process of performing blind detection on the DCI, the terminal device determines the foregoing target slot based on the timing periodicities of the DCI corresponding to the aggregation levels. In this way, even if the terminal device successfully demodulates the DCI via some CCEs carrying the DCI, the terminal device still needs to determine the target slot based on the timing periodicities of the DCI corresponding to the aggregation levels.

In Embodiment 2, the target slot is an $n_1^{th}$ slot in the timing periodicity. For example, the target slot is a last slot in the timing periodicity; or the target slot is a $1^{st}$ slot in the timing periodicity.

For example, in Embodiment 2, as shown in FIG. 10, the method 200 further includes S201b before S210. The following describes S201b in detail.

S201b: The network device sends third configuration information to the terminal device. Correspondingly, the terminal device receives the third configuration information sent from the network device, and the terminal device performs blind detection on the DCI based on the third configuration information.

The third configuration information indicates timing periodicities of DCI corresponding to a plurality of aggregation levels, and the target slot is a slot in the timing periodicity. The plurality of aggregation levels include a first aggregation level and a second aggregation level, and a timing periodicity of DCI that uses the first aggregation level is the same as a timing periodicity of DCI that uses the second aggregation level. The first aggregation level is different from the second aggregation level, and a quantity of slots occupied by the DCI that uses the first aggregation level is different from a quantity of slots occupied by the DCI that uses the second aggregation level; or the first aggregation level is the same as the second aggregation level, and a quantity of repeated transmissions of the DCI that uses the first aggregation level is different from a quantity of repeated transmissions of the DCI that uses the second aggregation level.

Specific values of the timing periodicity of the DCI that uses the first aggregation level and the timing periodicity of the DCI that uses the second aggregation level are not limited in this application.

In an example, the timing periodicity of the DCI that uses the first aggregation level and the timing periodicity of the DCI that uses the second aggregation level may be equal to a transmission periodicity of the DCI that uses the second aggregation level. When the first aggregation level is different from the second aggregation level, the quantity of slots occupied by the DCI that uses the second aggregation level is greater than the quantity of slots occupied by the DCI that uses the first aggregation level. Alternatively, when the first aggregation level is the same as the second aggregation level, the quantity of repeated transmissions of the DCI that uses the second aggregation level is greater than the quantity of repeated transmissions of the DCI that uses the first aggregation level.

For example, the first aggregation level may be 8, the second aggregation level may be 16, the quantity of slots occupied by the DCI that uses the first aggregation level is 2, and the quantity of slots occupied by the DCI that uses the second aggregation level is 4. In addition, the timing periodicity of the DCI that uses the aggregation level of 8 and the timing periodicity of the DCI that uses the aggregation level of 16 may be equal to the transmission periodicity of the DCI that uses the aggregation level of 16, that is, the timing periodicity of the DCI that uses the aggregation level of 8 and the timing periodicity of the DCI that uses the aggregation level of 16 are four slots. In this case, regardless of whether the aggregation level used by the terminal device is 8 or 16, the target slot is determined from the timing periodicity of four slots. In this way, even if the terminal device completes DCI decoding via the first eight CCEs (the first two slots), the terminal device still needs to determine the target slot based on the timing periodicity of four slots. In this case, the terminal device determines an $i_1^{th}$ slot in the four slots as the target slot. $1 \le i_1 \le 4$, and a specific value of $i_1$ is determined according to the rule for determining the target slot. The target slot is the same as a target slot determined after the DCI is decoded via 16 CCEs. Therefore, the terminal device does not confuse AL8 and AL 16.

For another example, both the first aggregation level and the second aggregation level may be 4, both the quantity of slots occupied by the DCI that uses the first aggregation level and the quantity of slots occupied by the DCI that uses the second aggregation level are 1, and the DCI that uses the second aggregation level is repeatedly transmitted in four slots. In addition, a timing periodicity of DCI that uses AL4 and a timing periodicity of DCI that uses AL4×4 may be equal to a transmission periodicity of the DCI that uses AL4×4, that is, the timing periodicity of the DCI that uses AL4 and the timing periodicity of the DCI that uses AL4×4 are four slots. In this case, regardless of whether the terminal device uses AL4 or AL4×4, the target slot is determined from the timing periodicity of four slots. In this way, even if the terminal device completes DCI decoding via the first four CCEs (the $1^{st}$ slot), the terminal device still needs to determine the target slot based on the timing periodicity of four slots. In this case, the terminal device determines an $i_2^{th}$ slot in the four slots as the target slot. $1 \le i_2 \le 4$, and a specific value of $i_2$ is determined according to the rule for determining the target slot. The target slot is the same as a target slot determined after the DCI is decoded via 16 CCEs. Therefore, the terminal device does not confuse AL4 and AL4×4.

AL4×4 described above may be understood as that an AL used by the DCI is 4, and the DCI is repeatedly transmitted for four times.

Optionally, in this example, in addition to the first aggregation level and the second aggregation level, the plurality of aggregation levels may further include another aggregation level, where the another aggregation level is different from the first aggregation level and the second aggregation level, and a timing periodicity of the another aggregation level is 1. For example, the third configuration information may indicate that: when the aggregation level is 1 (an example of the another aggregation level), the timing periodicity is 1; when the aggregation level is 2 (another example of the another aggregation level), the timing periodicity is 1; when the aggregation level is 4 (still another example of the another aggregation level), the timing periodicity is 1; when the aggregation level is 8 (an example of the first aggregation level), the timing periodicity is 4; or when the aggregation level is 16 (an example of the second aggregation level), the timing periodicity is 4.

Optionally, the third configuration information further indicates a start location of the timing periodicity. For example, as shown in FIG. 7 and FIG. 8, the third configuration information further indicates that the start location of the timing periodicity is the 1st slot (slot 0).

For other examples and related descriptions of the first aggregation level and the second aggregation level in the third configuration information, refer to the examples and related descriptions of the first aggregation level and the second aggregation level in the second configuration information. Details are not described herein again.

It should be noted that, first, the network device may include the third configuration information and the first configuration information respectively in two separate messages, and send the two separate messages to the terminal device. Alternatively, the network device may include the third configuration information and the first configuration information in one message and send the message to the terminal device. In this case, a type of the message that carries the third configuration information and the first configuration information is not limited in this application. For example, the message may be a search space (search space) configuration message. Optionally, two fields may be newly added to the search space configuration message, and the two fields newly added respectively indicate content indicated by the third configuration information and content indicated by the first configuration information.

Second, in Embodiment 3, the network device may configure, according to an existing solution, a quantity of detections at each AL in search space configuration information configured for the terminal device.

In Embodiment 3, to avoid confusion of aggregation levels of the DCI by the terminal device in the process of performing blind detection on the DCI, the network device may include, in the DCI, aggregation levels used by the DCI. In this way, in the process of performing blind detection on the DCI, the terminal device does not confuse the aggregation levels of the DCI.

For example, a field may be newly added to the DCI, the field includes one or more bits, and the one or more bits indicate an aggregation level of the DCI. For example, if the convergence level used by the DCI is 8, the one or more bits in the newly added field in the DCI may indicate the first state; or if the convergence level used by the DCI is 16, the one or more bits in the newly added field in the DCI may indicate the second state.

In Embodiment 3, the terminal device further needs to perform S250 between S210 and S220. The following describes S250 in detail.

S250: Determine that the target slot is a slot in a DCI sending periodicity when blindly detecting that an aggregation level of DCI is not equal to the aggregation level indicated by the DCI. In this way, even if the terminal device successfully demodulates the DCI via some CCEs carrying the DCI, the terminal device still needs to determine the target slot based on the DCI sending periodicity, so that the terminal device can determine a correct target slot.

The target slot is an $n_1^{th}$ slot in the DCI sending periodicity. For example, the target slot is a last slot in the DCI sending periodicity; or the target slot is a 1st slot in the DCI sending periodicity.

It should be noted that the DCI sending periodicity in S250 may be understood as a periodicity corresponding to the aggregation level indicated by the DCI. For example, if the aggregation level indicated by the DCI is 8, and the aggregation level corresponds to two slots, the DCI sending periodicity is two slots. For another example, if the aggregation level indicated by the DCI is 16, and the aggregation level corresponds to four slots, the DCI sending periodicity is four slots.

In addition, when one piece of DCI is transmitted in a plurality of slots, the DCI sending periodicity is equal to a quantity of the plurality of slots occupied by the piece of DCI.

For example, the terminal device completes DCI decoding via the first eight CCEs (the first two slots), but obtains, through DCI decoding, that the aggregation level indicated by the DCI is 16. In this case, the terminal device needs to determine the target slot based on slots (four slots), that is, the DCI sending periodicity, corresponding to the aggregation level of 16.

A trigger entity for triggering the terminal device to perform S250 is not limited in this application.

In an example, the trigger body may be the network device. The network device sends indication information to the terminal device, where the indication information indicates to determine that the target slot is a slot in a DCI sending periodicity when blindly detecting that an aggregation level of DCI is not equal to the aggregation level indicated by the DCI.

In another example, the trigger body may be defined or specified in a communication protocol: determining that the target slot is a slot in a DCI sending periodicity when blindly detecting that an aggregation level of DCI is not equal to the aggregation level indicated by the DCI.

In Embodiment 4, to avoid confusion of quantities of repeated transmissions of the DCI by the terminal device in the process of performing blind detection on the DCI, the network device may include, in the DCI, quantities of repeated transmissions of the DCI. In this way, in the process of performing blind detection on the DCI, the terminal device does not confuse the quantities of repeated transmissions of the DCI.

For example, a field may be newly added to the DCI, the field includes one bit, and the bit indicates whether the DCI is repeatedly transmitted. For example, if the DCI is not repeatedly transmitted, that is, the DCI is transmitted only once, the bit in the newly added field in the DCI may be 0; or if the DCI is repeatedly transmitted, the bit in the newly added field in the DCI may be 1. In this case, the quantity of repeated transmissions of the DCI may be preset. A specific value of the quantity of repeated transmissions of the DCI is not limited in this application. For example, the quantity of repeated transmissions of the DCI may be 4.

For another example, a field may be newly added to the DCI, the field includes two bits, and the two bits indicate whether the DCI is repeatedly transmitted. In addition, when the DCI is repeatedly transmitted, the two bits not only indicate whether the DCI is repeatedly transmitted, but also indicate a quantity of repeated transmissions of the DCI. For example, if the DCI is not repeatedly transmitted, that is, the DCI is transmitted only once, the two bits in the newly added field in the DCI may be 00; or if the DCI is repeatedly transmitted, and the quantity of repeated transmissions is 4, the two bits in the newly added field in the DCI may be 11.

It should be noted that if the DCI is not repeatedly transmitted, the quantity of repeated transmissions carried in the DCI may be 1.

In this example, the terminal device further needs to perform S260 between S210 and S220. The following describes S260 in detail.

S260: Determine that the target slot is a slot in a DCI sending periodicity when blindly detecting that a quantity of repeated transmissions of DCI is not equal to the quantity of repeated transmissions indicated by the DCI. In this way, even if the terminal device successfully demodulates the DCI via some CCEs carrying the DCI, the terminal device still needs to determine the target slot based on the DCI sending periodicity, so that the terminal device can determine a correct target slot.

The target slot may be an $n_1^{th}$ slot in the DCI sending periodicity. For example, the target slot is a last slot in the DCI sending periodicity; or the target slot is a 1st slot in the DCI sending periodicity.

It should be noted that the DCI sending periodicity in S260 may be understood as a periodicity corresponding to the quantity of repeated transmissions indicated by the DCI. For example, if the quantity of repeated transmissions indicated by the DCI is 4, and the quantity of repeated transmissions corresponds to four slots, the DCI sending periodicity is four slots.

In addition, when the same piece of DCI is repeatedly transmitted in each of the plurality of slots, the DCI sending periodicity is equal to a quantity of the plurality of slots occupied by the same piece of DCI, that is, a quantity of repeated transmissions of the same piece of DCI.

For example, the terminal device completes DCI decoding via the first four CCEs (the first two slots), but obtains, through interpretation of the DCI, that the quantity of repeated transmissions of the DCI indicated by the DCI is 4. In this case, the terminal device needs to determine the target slot based on slots (four slots), that is, the DCI sending periodicity, corresponding to the quantity of repeated transmissions of 4. In this way, even if the terminal device successfully demodulates the DCI via some CCEs carrying the DCI, the terminal device still needs to determine the target slot based on the periodicity corresponding to the quantity of repeated transmissions indicated by the DCI, so that the terminal device can determine a correct target slot.

A trigger entity for triggering the terminal device to perform S260 is not limited in this application.

In an example, the trigger body may be the network device. The network device sends indication information to the terminal device, where the indication information indicates to determine that the target slot is a slot in a DCI sending periodicity when blindly detecting that a quantity of repeated transmissions of DCI is not equal to the quantity of repeated transmissions indicated by the DCI.

In another example, the trigger body may be defined or specified in a communication protocol: determining that the target slot is a slot in a DCI sending periodicity when blindly detecting that an aggregation level of DCI is not equal to the aggregation level indicated by the DCI.

In Embodiment 5, to avoid confusion of aggregation levels of the DCI or quantities of repeated transmissions of the DCI by the terminal device in the process of performing blind detection on the DCI, the network device may perform interleaving processing on a sequence of the DCI after encoding the sequence of the DCI. In this way, a case in which the DCI can be successfully demodulated via only some CCEs carrying the DCI can be avoided for the terminal device, and therefore, the terminal device does not incorrectly determine the target slot.

In Embodiment 5, before sending the DCI, the network device further performs S270 to S290. The following describes S270 to S290 in detail.

It should be noted that, in an example, regardless of an aggregation level used by the DCI, the network device may perform S270 to S290 for all DCI. In another example, the network device may perform S270 to S290 only for DCI that uses a first aggregation level and DCI that uses a second aggregation level. This is not limited in this application.

S270: The network device obtains a first sequence. The first sequence is a sequence of DCI obtained through encoding and code rate matching.

S280: The network device performs interleaving processing on the first sequence to obtain a second sequence.

In an example, S280 specifically includes: S281a: The network device converts the first sequence into a triangular matrix in a manner of conversion by row or column, where a length of the first sequence is E, a quantity of columns or rows in the triangular matrix is $T_1$, and $T_1$ is a smallest integer satisfying $\dfrac{T_1(T_1+1)}{2} \geq E$. S282a: The network device determines a sequence obtained by sequentially arranging elements in the triangular matrix by column or row as the second sequence.

For example, the network device may include a first interleaver. The first interleaver is of a triangular storage structure, and a side length of the storage structure is $T_1$. The first interleaver may interleave the first sequence in a row-in column-out (row-write column-read) interleaving mode or a column-in row-out (column-write row-read) interleaving mode, to obtain the second sequence.

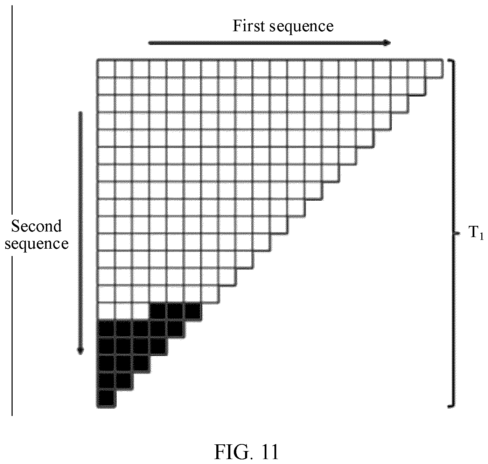

For example, as shown in FIG. 11, the first sequence is written into the first interleaver by row. Finally, there may be some locations with no input, and these locations with no input are marked as null (null). In this case, content in the first interleaver is read by column, and a null location is skipped, so that the second sequence is obtained, where a length of the second sequence is E. Whether the triangular storage structure of the first interleaver is in a shape of an upper triangle or a lower triangle is not limited in this application.

It should be noted that the foregoing descriptions are provided by using an example in which the storage structure of the first interleaver is in a shape of a triangle, and this should not constitute a limitation on this application. For example, the storage structure of the first interleaver may alternatively be in a shape of a square, and an interleaving principle of the first interleaver is similar to a principle of the first interleaver of the triangular storage structure. Details are not described herein again.

If the network device sends the DCI at an AL of 8, and a sequence length E of the DCI obtained through code rate matching is 864 bits, the side length $T_1$ of the first interleaver is 42. If the network device sends the DCI at an AL of 16, and a sequence length E of the DCI obtained through code rate matching is 1728 bits, the side length $T_1$ of the first interleaver is 42. Because the first interleaver uses a triangular storage structure with different side lengths, the first 864 bits of an interleaved bit sequence of the DCI that uses the AL of 16 are no longer the same as an interleaved bit sequence of the DCI that uses the AL of 8. In this way, the terminal device fails to decode, based on the AL of 8, the first eight CCEs that uses the AL of 16.

In another example, S280 specifically includes: S281b: Divide the first sequence into $H_1$ subsequences based on an arrangement order of elements in the first sequence, where a length of each of the $H_1$ subsequences is a quantity of bits transmitted by one CCE. S282b: Perform sequence-level interleaving on the $H_1$ subsequences to obtain the second sequence.

It should be noted that performing sequence-level interleaving on the $H_1$ subsequences may be understood as performing interleaving by using each of the $H_1$ subsequences as a minimum interleaving unit.

For example, S282b specifically includes: mapping an $i$th subsequence in the $H_1$ subsequences to a $k$th CCE on a $j$th PDCCH monitoring occasion, where $j=\mathrm{mod}(v,N)$, $k = \left\lfloor \dfrac{v}{N} \right\rfloor$, $v$ represents a number of the $i$th subsequence in the $H_1$ subsequences, and N represents a quantity of slots occupied by the DCI; and arranging, based on an arrangement order of PDCCH monitoring occasions and an arrangement order of CCEs on the PDCCH monitoring occasion, subsequences mapped to each CCE, to obtain the second sequence. In this case, it may be understood that the network device first sequentially maps the first sequence to virtual (virtual) CCEs. An arrangement order of the virtual CCEs is an order of the $H_1$ subsequences. Then the network device maps subsequences mapped to the virtual CCEs to physical (physical) CCEs for transmission. A number $i$ of the virtual CCE, a number $j$ of the PDCCH monitoring occasion, and a number $k$ of the physical CCE satisfy the foregoing formulas.

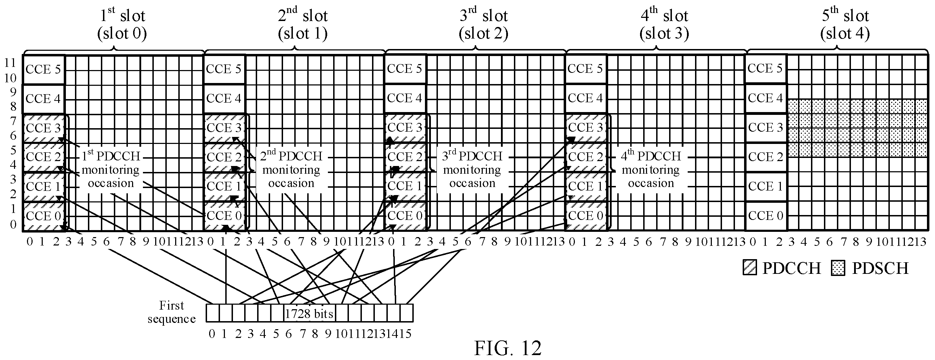

For example, as shown in FIG. 12, if the quantity N of slots occupied by the DCI is 4, and the AL used by the DCI is 16, the sequence length of the DCI obtained through code rate matching is 1728 bits. In addition, if 108 bits can be transmitted on one CCE, the sequence of the DCI obtained through code rate matching may be divided into 16 (an example of a value of $H_1$) subsequences. In this case, values of $j$ and $k$ may be obtained according to $j=\mathrm{mod}(v,N)$ and $k = \left\lfloor \dfrac{v}{N} \right\rfloor$. Details are shown in Table 2.

**Table 2**

| N | $v$ | $j$ | $k$ |
|---|-----|-----|-----|
| 4 | 0 | 0 | 0 |
|   | 1 | 1 | 0 |

(continued)

| N | v | j | k |
|---|---|---|---|
|  | 2 | 2 | 0 |
|  | 3 | 3 | 0 |
|  | 4 | 0 | 1 |
|  | 5 | 1 | 1 |
|  | 6 | 2 | 1 |
|  | 7 | 3 | 1 |
|  | 8 | 0 | 2 |
|  | 9 | 1 | 2 |
|  | 10 | 2 | 2 |
|  | 11 | 3 | 2 |
|  | 12 | 0 | 3 |
|  | 13 | 1 | 3 |
|  | 14 | 2 | 3 |
|  | 15 | 3 | 3 |

In this way, the first 864 bits of an interleaved bit sequence of the DCI that uses the AL of 16 are no longer the same as an interleaved bit sequence of the DCI that uses the AL of 8. In this way, the terminal device fails to decode, based on the AL of 8, the first eight CCEs that uses the AL of 16.

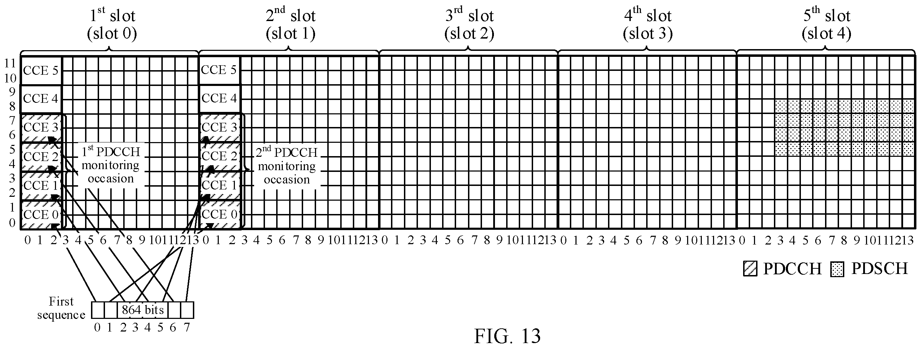

For example, as shown in FIG. 13, if the AL used by the DCI is 4, and the DCI is transmitted in a 1st slot and a 2nd slot, that is, the quantity of repeated transmissions of the DCI is 2, the sequence length of the DCI obtained through code rate matching is 864 bits. In addition, if 108 bits can be transmitted on one CCE, the sequence of the DCI obtained through code rate matching may be divided into eight (an example of a value of $H_1$) subsequences. In this case, values of $j$ and $k$

$$k = \left\lfloor \frac{v}{N} \right\rfloor$$

may be obtained according to $j=\mathrm{mod}(v,N)$ and . Details are shown in Table 3.

**Table 3**

| N | v | j | k |
|---|---|---|---|
| 2 | 0 | 0 | 0 |
|  | 1 | 1 | 0 |
|  | 2 | 0 | 1 |
|  | 3 | 1 | 1 |
|  | 4 | 0 | 2 |
|  | 5 | 1 | 2 |
|  | 6 | 0 | 3 |
|  | 7 | 1 | 3 |

When the DCI is repeatedly transmitted or the DCI is transmitted in one slot, for example, the aggregation level used by the DCI is 4, and the DCI is transmitted in one slot; or the aggregation level used by the DCI is 4, and the DCI is repeatedly transmitted in four slots, S282b may further specifically include: mapping an $i^{th}$ subsequence in the $H_1$ subsequences to a $k^{th}$ CCE, where $k=\mathrm{mod}(i+m, M)$, and m and M are positive integers; and arranging, based on an arrangement order of CCEs on a PDCCH monitoring occasion, subsequences mapped to each CCE, to obtain the second sequence.

Specific values of m and M are not limited in embodiments of this application.

For example, as shown in FIG. 13, if the aggregation level used by the DCI is 4, and the DCI is transmitted in a $1^{st}$ slot and a $2^{nd}$ slot, that is, the quantity of repeated transmissions of the DCI is 2, the sequence length of the DCI obtained through code rate matching is 864 bits. In addition, if 108 bits can be transmitted on one CCE, the sequence of the DCI obtained through code rate matching may be divided into eight (an example of a value of $H_1$) subsequences. If m is 2, and M is 4, the value of $k$ may be obtained according to $k=\text{mod}(i+m, M)$. Details are shown in Table 4.

**Table 4**

| i | k |
|---|---|
| 0 | 2 |
| 1 | 3 |
| 2 | 0 |
| 3 | 1 |

In this way, the first 432 bits of an interleaved bit sequence of the DCI that uses the AL of 4 are no longer the same as an interleaved bit sequence of the DCI that uses the AL of 4 and whose quantity of repeated transmissions is 2. In this way, the terminal device fails to decode, based on the AL of 4, the first eight CCEs that uses AL4×4.

S290: Map, based on an arrangement order of elements in the second sequence, each element in the second sequence to a corresponding CCE, and send the DCI.

In Embodiment 5, before sending the DCI, the network device performs S270 to S290. Correspondingly, in the process in which the terminal device performs blind detection on the DCI, the terminal device specifically performs S211 to S213, that is, S210 specifically includes S211 to S213. The following describes S211 to S213 in detail.

S211: The terminal device obtains the second sequence, where the second sequence is a sequence of demodulated DCI.

S212: The terminal device performs de-interleaving processing on the second sequence to obtain the first sequence.

In an example, S212 specifically includes: S2121a: The terminal device converts the second sequence into a triangular matrix in a manner of conversion by column or row, where the length of the second sequence is E, a quantity of columns or rows in the triangular matrix is $T_1$, and $T_1$ is a smallest integer satisfying $\dfrac{T_1(T_1+1)}{2} \geq E$ . S2122a: The terminal device determines a sequence obtained by sequentially arranging elements in the triangular matrix by row or column as the first sequence.

For example, the terminal device may include a second interleaver. A storage structure of the second interleaver is the same as the storage structure of the first interleaver included in the network device. For example, if the first interleaver is of a triangular storage structure, the second interleaver is also of a triangular storage structure, where a side length of the storage structure is also $T_1$. In addition, the second interleaver may de-interleave the second sequence in a column-in row-out (column-write row-read) de-interleaving mode or a row-in column-out (row-write column-read) de-interleaving mode, to obtain the first sequence.

It should be noted that the de-interleaving is also an interleaving processing manner, but a de-interleaving process of the terminal device is opposite to or inverse to an interleaving process of the network device. For example, if the first interleaver uses the row-in column-out (row-write column-read) interleaving mode or the column-in row-out (column-write row-read) interleaving mode, the second interleaver uses the column-in row-out (column-write row-read) interleaving mode or the row-in column-out (row-write column-read) interleaving mode.

If the network device sends the DCI at an AL of 8, and a sequence length E of the DCI obtained through code rate matching is 864 bits, the side length $T_1$ of the second interleaver is 42. If the network device sends the DCI at an AL1 of 6, and a sequence length E of the DCI obtained through code rate matching is 1728 bits, the side length $T_1$ of the second interleaver is 42. Because the second interleaver uses a triangular storage structure with different side lengths, the first 864 bits of an interleaved bit sequence of the DCI that uses the AL of 16 are no longer the same as an interleaved bit sequence of the DCI that uses the AL of 8. In this way, the terminal device fails to decode, based on the AL of 8, the first eight CCEs that uses the AL of 16.

In another example, S212 specifically includes: S2121b: Divide the second sequence into $H_2$ subsequences based on an arrangement order of elements in the second sequence, where a length of each of the $H_2$ subsequences is a quantity of bits transmitted by one CCE. S2122b: Perform sequence-level de-interleaving on the $H_2$ subsequences to obtain the first sequence.

It should be noted that performing sequence-level de-interleaving on the $H_2$ subsequences may be understood as performing de-interleaving by using each of the $H_2$ subsequences as a minimum interleaving unit.

For example, S2122b specifically includes: determining a subsequence carried on a $k^{th}$ CCE on a $j^{th}$ PDCCH monitoring occasion in the $H_2$ subsequences as an $i^{th}$ subsequence of the first sequence, where $j=$mod(v,N),

$$k = \left\lfloor \frac{v}{N} \right\rfloor$$

, $v$ represents a number of the $i^{th}$ subsequence in the first sequence, and N represents a quantity of slots occupied by the DCI. In this case, it may be understood that the terminal device first maps, to virtual (virtual) CCEs based on an order of PDCCH monitoring occasions and an order of CCEs on the PDCCH monitoring occasion, subsequences transmitted on physical (physical) CCEs, and then arranges, based on the arrangement order of the virtual CCEs, the subsequences mapped to the virtual CCEs, to obtain the first sequence. The arrangement order of the virtual CCEs is an order of the $H_2$ subsequences. A number $i$ of the virtual CCE, a number $j$ of the PDCCH monitoring occasion, and a number $k$ of the physical CCE satisfy the foregoing formulas.

When the DCI is repeatedly transmitted or the DCI is transmitted in one slot, for example, the aggregation level used by the DCI is 4, and the DCI is transmitted in one slot; or the aggregation level used by the DCI is 4, and the DCI is repeatedly transmitted in four slots, S2122b may further specifically include: determining a subsequence carried on the $k^{th}$ CCE in the $H_2$ subsequences as the $i^{th}$ subsequence of the first sequence, where $k=$mod($i+m$, M), and m and M are positive integers. In this way, the first 432 bits of an interleaved bit sequence of the DCI that uses the AL of 4 are no longer the same as an interleaved bit sequence of the DCI that uses the AL of 4 and whose quantity of repeated transmissions is 2. In this way, the terminal device fails to decode, based on the AL of 4, the first eight CCEs that uses AL4×4.

S213: Decode the first sequence to obtain information carried in the DCI.

In Embodiment 1 to Embodiment 5 described above, in terms of frequency, a bandwidth occupied by the DCI in each slot is within a communication bandwidth of the terminal device. However, in a wireless communication system, frequency selective fading exists on a channel. Consequently, when the communication bandwidth of the terminal device is narrow, if the frequency is in deep fading, transmission performance of the terminal device is affected.

Therefore, on a basis of ensuring demodulation performance of the terminal device, that is, on a basis of the foregoing communication method 200, to improve the transmission performance of the terminal device, when one piece of DCI is transmitted in a plurality of slots, the network device may send, in each of the plurality of slots at different frequencies, some content of the DCI that originally needs to be sent in the slot. When the same piece of DCI is transmitted in each of a plurality of slots, the network device may repeatedly send, in each of the plurality of slots at different frequencies, the DCI that originally needs to be sent in the slot.

In an example, when configuring a CORESET for the terminal device, the network device also configures frequency hopping information of the CORESET. The frequency hopping information of the CORESET includes a frequency hopping periodicity of the CORESET, a frequency hopping step, and a start frequency of the CORESET in one frequency hopping periodicity. In this way, before performing blind detection on DCI in each of the plurality of slots, the terminal device performs frequency hopping once in each slot in one frequency hopping periodicity based on the frequency hopping information of the CORESET. In this example, a frequency width of the CORESET does not exceed the communication bandwidth supported by the terminal device.

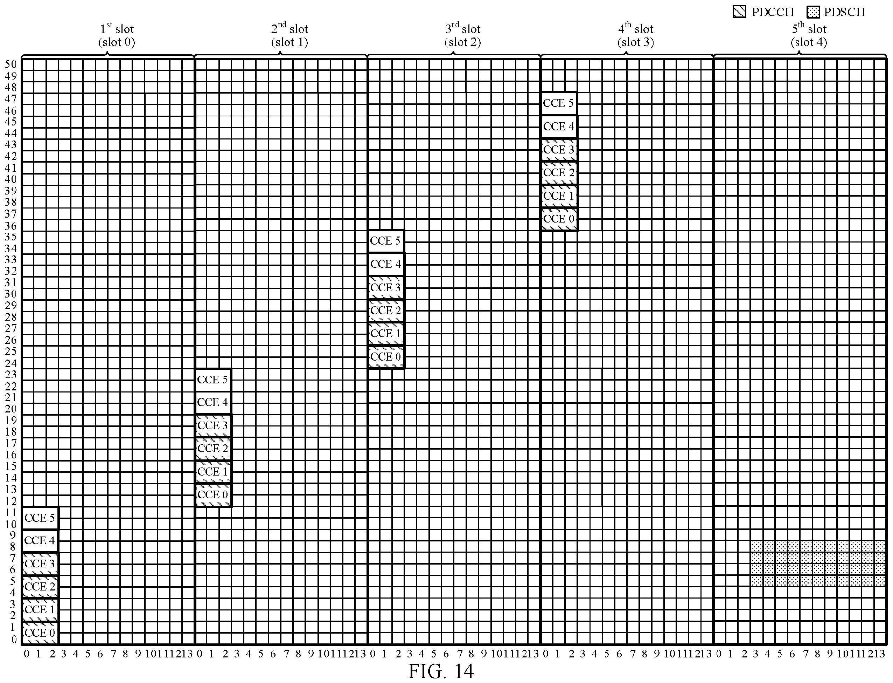

For example, as shown in FIG. 14, if the network device transmits one piece of DCI in four slots, to be specific, the network device sends a first part of the DCI on RBs 0 to 9 in a $1^{st}$ slot (slot 0), sends a second part of the DCI on RBs 12 to 21 in a $2^{nd}$ slot (slot 1), sends a third part of the DCI on RBs 24 to 33 in a $3^{rd}$ slot (slot 2), and sends a fourth part of the DCI on RBs 36 to 45 in a $4^{th}$ slot (slot 3), the frequency hopping information of the CORESET configured by the network device for the terminal device includes: the frequency hopping periodicity of the CORESET being four slots, the frequency hopping step being 11 RBs, and the start frequency of the CORESET in one frequency hopping periodicity being the RB 0. In this way, based on the frequency hopping information of the CORESET, the terminal device performs blind detection on the first part of the DCI in the $1^{st}$ slot (slot 0) by using the RB 0 as the start frequency and using 11 RBs as the frequency hopping step; performs blind detection on the second part of the DCI in the $2^{nd}$ slot (slot 1) by using the RB 12 as the start frequency and using 11 RBs as the frequency hopping step; performs blind detection on the third part of the DCI in the $3^{rd}$ slot (slot 2) by using the RB 24 as the start frequency and using 11 RBs as the frequency hopping step; and performs blind detection on the fourth part of the DCI in the $4^{th}$ slot (slot 3) by using the RB 36 as the start frequency and using 11 RBs as the frequency hopping step, to complete a process of performing blind detection on the DCI in one frequency hopping periodicity.

For another example, as shown in FIG. 14, if the network device repeatedly transmits the same piece of DCI in each of four slots, to be specific, the network device sends the DCI on RBs 0 to 9 in a $1^{st}$ slot (slot 0) for the first time, sends the DCI on RBs 12 to 21 in a $2^{nd}$ slot (slot 1) for the second time, sends the DCI on RBs 24 to 33 in a $3^{rd}$ slot (slot 2) for the third time, and sends the DCI on RBs 36 to 45 in a $4^{th}$ slot (slot 3) for the fourth time, the frequency hopping information of the CORESET configured by the network device for the terminal device includes: the frequency hopping periodicity of the CORESET being four slots, the frequency hopping step being 11 RBs, and the start frequency of the CORESET in one frequency hopping periodicity being the RB 0. In this way, based on the frequency hopping information of the CORESET, the terminal device performs blind detection on the DCI, sent by the network device for the first time, in the 1st slot (slot 0) by using the RB 0 as the start frequency and using 11 RBs as the frequency hopping step; performs blind detection on the DCI, sent by the network device for the second time, in the 2nd slot (slot 1) by using the RB 12 as the start frequency and using 11 RBs as the frequency hopping step; performs blind detection on the DCI, sent by the network device for the third time, in the 3rd slot (slot 2) by using the RB 24 as the start frequency and using 11 RBs as the frequency hopping step; and performs blind detection on the DCI, sent by the network device for the fourth time, in the 4th slot (slot 3) by using the RB 36 as the start frequency and using 11 RBs as the frequency hopping step, to complete a process of performing blind detection on the DCI in one frequency hopping periodicity.

In another example, when configuring search space for the terminal device, the network device also configures a CORESET part that needs to be monitored by the terminal device on each PDCCH monitoring occasion in each blind detection periodicity. In this example, a frequency width of the CORESET may exceed the communication bandwidth supported by the terminal device.

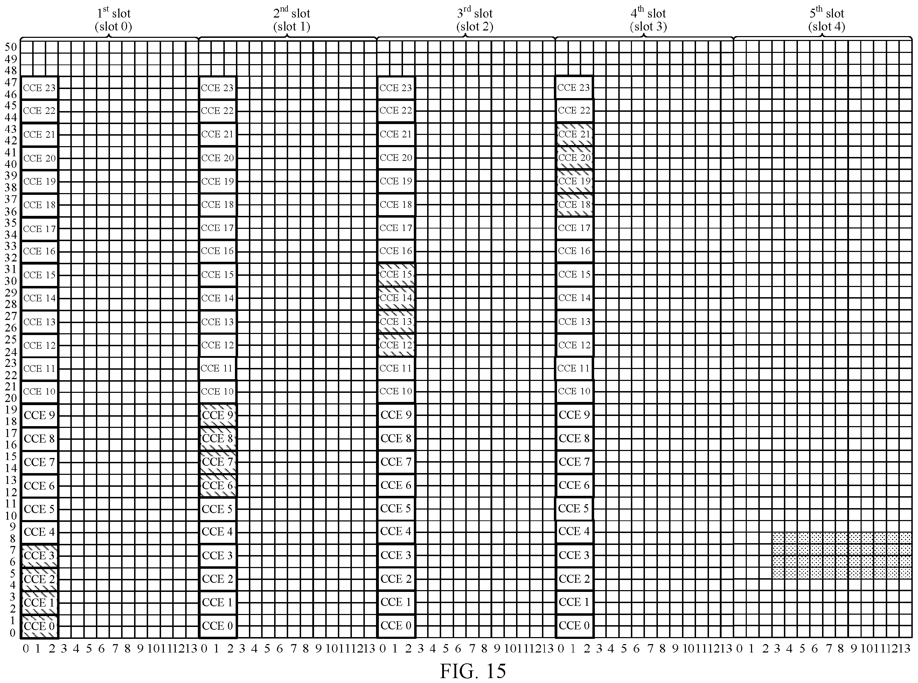

For example, as shown in FIG. 15, the network device transmits one piece of DCI in four slots, to be specific, the network device sends a first part of the DCI on RBs 0 to 9 in a 1st slot (slot 0), sends a second part of the DCI on RBs 12 to 21 in a 2nd slot (slot 1), sends a third part of the DCI on RBs 24 to 33 in a 3rd slot (slot 2), and sends a fourth part of the DCI on RBs 36 to 45 in a 4th slot (slot 3). Alternatively, the network device repeatedly transmits the same piece of DCI in each of four slots, to be specific, the network device sends the DCI on RBs 0 to 9 in a 1st slot (slot 0) for the first time, sends the DCI on RBs 12 to 21 in a 2nd slot (slot 1) for the second time, sends the DCI on RBs 24 to 33 in a 3rd slot (slot 2) for the third time, and sends the DCI on RBs 36 to 45 in a 4th slot (slot 3) for the fourth time.

In this case, the network device configures the terminal device to: monitor CCEs 0 to 3 of the CORESET on a PDCCH monitoring occasion in the 1st slot (slot 0); monitor CCEs 6 to 9 of the CORESET on a PDCCH monitoring occasion in the 2nd slot (slot 1); monitor CCEs 12 to 15 of the CORESET on a PDCCH monitoring occasion in the 3rd slot (slot 2); and monitor CCEs 18 to 21 of the CORESET on a PDCCH monitoring occasion in the 4th slot (slot 3). In this way, the terminal device completes a process of performing blind detection on the DCI in one periodicity based on the CORESET part that needs to be monitored on each PDCCH monitoring occasion.

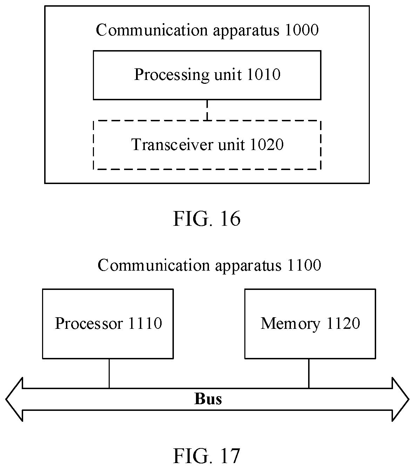

Communication apparatuses provided in embodiments of this application are described in detail below with reference to FIG. 16 and FIG. 17.

FIG. 16 is a diagram of an example of a structure of a communication apparatus 1000 according to an embodiment of this application.

For example, as shown in FIG. 16, the communication apparatus 1000 includes a processing unit 1010, configured to perform data processing.

Optionally, the communication apparatus 1000 may further include a transceiver unit 1020, configured to communicate with the outside. The transceiver unit 1020 may also be referred to as a communication interface or a communication unit.

Optionally, the communication apparatus 1000 may further include a storage unit. The storage unit may be configured to store instructions and/or data. The processing unit 1010 may read the instructions and/or the data in the storage unit.

In a possible implementation, the communication apparatus 1000 may be configured to perform an action performed by the terminal device in the foregoing method embodiment. In this case, the communication apparatus 1000 may be a terminal device or a component that may be configured for the terminal device. The processing unit 1010 is configured to perform a processing-related operation of the terminal device in the foregoing method embodiment. The transceiver unit 1020 is configured to perform a sending/receiving-related operation of the terminal device in the foregoing method embodiment.

In another possible implementation, the communication apparatus 1000 may be configured to perform an action performed by the network device in the foregoing method embodiment. In this case, the communication apparatus 1000 may be a network device or a component that may be configured for the network device. The processing unit 1010 is configured to perform a processing-related operation of the network device in the foregoing method embodiment. The transceiver unit 1020 is configured to perform a sending/receiving-related operation of the network device in the foregoing method embodiment.

FIG. 17 is a diagram of a structure of a communication apparatus 1100 according to an embodiment of this application.

For example, the communication apparatus 1100 may be the terminal device or the network device in the foregoing method embodiments.

As shown in FIG. 17, the communication apparatus 1100 includes one or more processors 1110 and one or more memories 1120. The one or more memories 1120 store one or more computer programs, and the one or more computer programs include instructions. When the instructions are run by the one or more processors 1110, the communication apparatus 1100 is enabled to execute the technical solutions executed by the terminal device in the foregoing embodiments, or the apparatus 1100 is enabled to execute the technical solutions executed by the network device in the foregoing embodiments.

An embodiment of this application provides a communication system, including a terminal device and a network device. The system is configured to perform the technical solutions of the foregoing embodiments. Implementation principles and technical effects thereof are similar to those of the foregoing method-related embodiments. Details are not described herein again.

An embodiment of this application provides a computer program product. When the computer program product runs on a device, the device is enabled to perform the technical solutions of the foregoing embodiments. Implementation principles and technical effects thereof are similar to those of the foregoing method-related embodiments. Details are not described herein again. The device may include the terminal device or the network device described in the foregoing embodiments.

An embodiment of this application provides a readable storage medium. The readable storage medium includes instructions. When the instructions are run on a device, the device is enabled to perform the technical solutions of the foregoing embodiments. An implementation principle and technical effect thereof are similar. Details are not described herein again. The device may include the terminal device or the network device described in the foregoing embodiments.

An embodiment of this application provides a chip. The chip is configured to execute instructions. When the chip runs, the technical solutions in the foregoing embodiments are performed. An implementation principle and technical effect thereof are similar. Details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be at one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions in embodiments of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, wherein the communication method is applied to a terminal device, and the communication method comprises:

performing blind detection on downlink control information DCI; and
determining a sending slot of a physical downlink shared channel PDSCH and/or a sending slot of a physical uplink shared channel PUSCH based on a target slot and the DCI, wherein the target slot is one of a plurality of slots that carry the DCI, the plurality of slots are for transmitting one piece of DCI, or each of the plurality of slots is for transmitting the same piece of DCI, and the target slot is preconfigured.

2.  The communication method according to claim 1, wherein before the determining a sending slot of a PDSCH and/or a sending slot of a PUSCH based on a target slot and the DCI, the communication method further comprises:
    receiving first configuration information from a network device, wherein the first configuration information is for determining the target slot.

3.  The communication method according to claim 2, wherein before the performing blind detection on downlink control information DCI, the communication method further comprises:

    receiving second configuration information from the network device, wherein the second configuration information indicates a quantity of blind detections at a plurality of aggregation levels, the plurality of aggregation levels comprise a first aggregation level and a second aggregation level, a quantity of blind detections at the first aggregation level is 0, and a quantity of blind detections at the second aggregation level is not 0, wherein
    the first aggregation level is different from the second aggregation level, and a quantity of slots occupied by DCI that uses the first aggregation level is different from a quantity of slots occupied by DCI that uses the second aggregation level; or
    the first aggregation level is the same as the second aggregation level, and a quantity of repeated transmissions of DCI that uses the first aggregation level is different from a quantity of repeated transmissions of DCI that uses the second aggregation level; and
    the performing blind detection on downlink control information DCI comprises:
    performing blind detection on the DCI based on the second configuration information.

4.  The communication method according to any one of claims 1 to 3, wherein the target slot is a last slot that carries the DCI; or
    the target slot is a $1^{st}$ slot that carries the DCI.

5.  The communication method according to claim 2, wherein the communication method further comprises:

    receiving third configuration information from the network device, wherein the third configuration information indicates timing periodicities of DCI corresponding to a plurality of aggregation levels, the target slot is a slot in the timing periodicity, the plurality of aggregation levels comprise a first aggregation level and a second aggregation level, and a timing periodicity of DCI that uses the first aggregation level is the same as a timing periodicity of DCI that uses the second aggregation level, wherein
    the first aggregation level is different from the second aggregation level, and a quantity of slots occupied by the DCI that uses the first aggregation level is different from a quantity of slots occupied by the DCI that uses the second aggregation level; or
    the first aggregation level is the same as the second aggregation level, and a quantity of repeated transmissions of the DCI that uses the first aggregation level is different from a quantity of repeated transmissions of the DCI that uses the second aggregation level.

6.  The communication method according to claim 5, wherein the third configuration information further indicates a start location of the timing periodicity.

7.  The communication method according to claim 5 or 6, wherein the target slot is a last slot in the timing periodicity; or
    the target slot is a $1^{st}$ slot in the timing periodicity.

8.  The communication method according to any one of claims 3 and 5 to 7, wherein

    the first aggregation level is 8, the second aggregation level is 16, the quantity of slots occupied by the DCI that uses the first aggregation level is 2, and the quantity of slots occupied by the DCI that uses the second aggregation level is 4; or
    the first aggregation level is 16, the second aggregation level is 8, the quantity of slots occupied by the DCI that uses the first aggregation level is 4, and the quantity of slots occupied by the DCI that uses the second aggregation level is 2; or
both the first aggregation level and the second aggregation level are 4, both the quantity of slots occupied by the DCI that uses the first aggregation level and the quantity of slots occupied by the DCI that uses the second aggregation level are 1, and the DCI that uses the second aggregation level is repeatedly transmitted in four slots.

9. The communication method according to claim 1 or 2, wherein the DCI indicates an aggregation level used by the DCI.

10. The communication method according to claim 9, wherein the communication method further comprises:
determining that the target slot is a slot in a DCI sending periodicity when blindly detecting that an aggregation level of DCI is not equal to the aggregation level indicated by the DCI.

11. The communication method according to claim 1 or 2, wherein the DCI indicates a quantity of repeated transmissions of the DCI.

12. The communication method according to claim 11, wherein the communication method further comprises:
determining that the target slot is a slot in a DCI sending periodicity when blindly detecting that a quantity of the plurality of slots for transmitting the same piece of DCI is not equal to the quantity of repeated transmissions of the DCI.

13. The communication method according to claim 10 or 12, wherein the target slot is a last slot or a 1st slot in the DCI sending periodicity.

14. The communication method according to claim 1 or 2, wherein the performing blind detection on DCI comprises:

obtaining a second sequence, wherein the second sequence is a sequence of demodulated DCI;
performing de-interleaving processing on the second sequence to obtain a first sequence; and
decoding the first sequence to obtain information carried in the DCI.

15. A communication method, wherein the communication method is applied to a network device, and the communication method comprises:
sending first configuration information to a terminal device, wherein the first configuration information is used by the terminal device to determine a target slot, the target slot is one of a plurality of slots that carry downlink control information DCI, and the plurality of slots are for transmitting one piece of DCI, or each of the plurality of slots is for transmitting the same piece of DCI.

16. The communication method according to claim 15, wherein the communication method further comprises:

sending second configuration information to the terminal device, wherein the second configuration information indicates a quantity of blind detections at a plurality of aggregation levels, the plurality of aggregation levels comprise a first aggregation level and a second aggregation level, a quantity of blind detections at the first aggregation level is 0, and a quantity of blind detections at the second aggregation level is not 0, wherein
the first aggregation level is different from the second aggregation level, and a quantity of slots occupied by DCI that uses the first aggregation level is different from a quantity of slots occupied by DCI that uses the second aggregation level; or
the first aggregation level is the same as the second aggregation level, and a quantity of repeated transmissions of DCI that uses the first aggregation level is different from a quantity of repeated transmissions of DCI that uses the second aggregation level.

17. The communication method according to claim 15 or 16, wherein the target slot is a last slot that carries the DCI; or the target slot is a 1st slot that carries the DCI.

18. The communication method according to claim 15, wherein the communication method further comprises:

sending third configuration information to the terminal device, wherein the third configuration information indicates timing periodicities of DCI corresponding to a plurality of aggregation levels, the target slot is a slot in the timing periodicities, the plurality of aggregation levels comprise a first aggregation level and a second aggregation level, and a timing periodicity of DCI that uses the first aggregation level is the same as a timing periodicity of DCI that uses the second aggregation level, wherein
the first aggregation level is different from the second aggregation level, and a quantity of slots occupied by the DCI that uses the first aggregation level is different from a quantity of slots occupied by the DCI that uses the second aggregation level; or

the first aggregation level is the same as the second aggregation level, and a quantity of repeated transmissions of the DCI that uses the first aggregation level is different from a quantity of repeated transmissions of the DCI that uses the second aggregation level.

19. The communication method according to claim 18, wherein the third configuration information further indicates a start location of the timing periodicity.

20. The communication method according to claim 18 or 19, wherein the target slot is a last slot in the timing periodicity; or the target slot is a 1st slot in the timing periodicity.

21. The communication method according to any one of claims 16 and 18 to 20, wherein

the first aggregation level is 8, the second aggregation level is 16, the quantity of slots occupied by the DCI that uses the first aggregation level is 2, and the quantity of slots occupied by the DCI that uses the second aggregation level is 4; or

the first aggregation level is 16, the second aggregation level is 8, the quantity of slots occupied by the DCI that uses the first aggregation level is 4, and the quantity of slots occupied by the DCI that uses the second aggregation level is 2; or

both the first aggregation level and the second aggregation level are 4, both the quantity of slots occupied by the DCI that uses the first aggregation level and the quantity of slots occupied by the DCI that uses the second aggregation level are 1, and the DCI that uses the second aggregation level is repeatedly transmitted in four slots.

22. The communication method according to claim 15, wherein the communication method further comprises: sending the DCI to the terminal device, wherein the DCI indicates an aggregation level used by the DCI or a quantity of repeated transmissions of the DCI.

23. The communication method according to claim 22, wherein the target slot is a last slot or a 1st slot in a DCI sending periodicity.

24. The communication method according to claim 15 or 16, wherein the communication method further comprises:

obtaining a first sequence, wherein the first sequence is a sequence of DCI obtained through encoding and code rate matching;

performing interleaving processing on the first sequence to obtain a second sequence; and

mapping, based on an arrangement order of elements in the second sequence, each element in the second sequence to a corresponding CCE, and sending the DCI.

25. The communication method according to claim 24, wherein the performing interleaving processing on the first sequence to obtain a second sequence comprises:

converting the first sequence into a triangular matrix in a manner of conversion by row or column, wherein a length of the first sequence is E, a quantity of columns or rows in the triangular matrix is $T_1$, and $T_1$ is a smallest integer

satisfying $\dfrac{T_1(T_1+1)}{2} \geq E$ ; and

determining a sequence obtained by sequentially arranging elements in the triangular matrix by column or row as the second sequence.

26. The communication method according to claim 24, wherein the performing interleaving processing on the first sequence to obtain a second sequence comprises:

dividing the first sequence into $H_1$ subsequences based on an arrangement order of elements in the first sequence, wherein a length of each of the $H_1$ subsequences is a quantity of bits transmitted by one CCE; and interleaving the $H_1$ subsequences to obtain the second sequence.

27. The communication method according to claim 26, wherein the interleaving the $H_1$ subsequences to obtain the second sequence comprises:

mapping an $i^{th}$ subsequence in the $H_1$ subsequences to a $k^{th}$ CCE on a $j^{th}$ PDCCH monitoring occasion, wherein

$$k = \left\lfloor \frac{v}{N} \right\rfloor$$

$j$=mod($v$,N), , v represents a number of the $i^{th}$ subsequence in the $H_1$ subsequences, and N represents a quantity of slots occupied by the DCI; and

arranging, based on an arrangement order of PDCCH monitoring occasions and an arrangement order of CCEs on the PDCCH monitoring occasion, subsequences mapped to each CCE, to obtain the second sequence.

28. The communication method according to claim 25 or 27, wherein

an aggregation level used by the DCI is 8, and the DCI is transmitted in two slots; or
an aggregation level used by the DCI is 16, and the DCI is transmitted in four slots; or
an aggregation level used by the DCI is 4, and the DCI is repeatedly transmitted in four slots.

29. The communication method according to claim 26, wherein the performing interleaving processing on the first sequence to obtain a second sequence comprises:

mapping an $i^{th}$ subsequence in the $H_1$ subsequences to a $k^{th}$ CCE, wherein $k$=mod($i$+m, M), and m and M are positive integers; and
arranging, based on an arrangement order of CCEs on a PDCCH monitoring occasion, subsequences mapped to each CCE, to obtain the second sequence.

30. The communication method according to claim 29, wherein

an aggregation level used by the DCI is 4, and the DCI is transmitted in one slot; or
an aggregation level used by the DCI is 4, and the DCI is repeatedly transmitted in four slots.

31. A communication system, wherein the communication system comprises a terminal device and a network device, the terminal device is configured to perform the communication method according to any one of claims 1 to 14, and/or the network device is configured to perform the communication method according to any one of claims 15 to 30.

32. A communication apparatus, comprising:

one or more processors;
one or more memories; and
one or more computer programs, wherein the one or more computer programs are stored in the one or more memories, the one or more computer programs comprise instructions, and when the instructions are executed by the one or more processors, the communication apparatus is enabled to perform the communication method according to any one of claims 1 to 30.

33. A computer-readable storage medium, comprising computer instructions, wherein when the computer instructions are run on a communication apparatus, the communication apparatus is enabled to perform the communication method according to any one of claims 1 to 30.

34. A chip, comprising at least one processor and an interface circuit, wherein the interface circuit is configured to provide program instructions or data for the at least one processor, and the at least one processor is configured to execute the program instructions, to implement the communication method according to any one of claims 1 to 30.

35. A computer program product, wherein the computer program product comprises computer instructions, and when some or all of the computer instructions are run on a computer, the communication method according to any one of claims 1 to 30 is performed.

FIG. 1

FIG. 2

EP 4 518 231 A1

FIG. 3

$a$ → CRC addition → $c$ → Channel encoding → $d$ → Code rate matching → $e$ → Modulation → $f$ → Map to an allocated CCE

FIG. 4

Start point

$d_{510}$  $d_{511}$  $d_0$  $d_1$  $d_2$

Circular buffer

$d_{431}$

$d_{351}$

FIG. 5

1<sup>st</sup> slot (slot 0)

FIG. 6

EP 4 518 231 A1

FIG. 7

EP 4 518 231 A1

☑ PDCCH  ☒ PDSCH

| 1st slot (slot 0) | 2nd slot (slot 1) | 3rd slot (slot 2) | 4th slot (slot 3) | 5th slot (slot 4) |
|---|---|---|---|---|

CCE 5   CCE 5   CCE 5   CCE 5   CCE 5
CCE 4   CCE 4   CCE 4   CCE 4   CCE 4
CCE 3   CCE 3   CCE 3   CCE 3   CCE 3
CCE 2   CCE 2   CCE 2   CCE 2   CCE 2
CCE 1   CCE 1   CCE 1   CCE 1   CCE 1
CCE 0   CCE 0   CCE 0   CCE 0   CCE 0

Send for the first time   Send for the second time   Send for the third time   Send for the fourth time

0 1 2 3 4 5 6 7 8 9 10 11 12 13  0 1 2 3 4 5 6 7 8 9 10 11 12 13  0 1 2 3 4 5 6 7 8 9 10 11 12 13  0 1 2 3 4 5 6 7 8 9 10 11 12 13  0 1 2 3 4 5 6 7 8 9 10 11 12 13

FIG. 8

200

```
┌─────────────────────────────────────────────────────────┐
│                                                         │
│         S210: Perform blind detection on DCI            │
│                                                         │
└─────────────────────────────────────────────────────────┘
                            │
                            │
┌─────────────────────────────────────────────────────────┐
│  S220: Determine a sending slot of a PDSCH and/or a     │
│  sending slot of a PUSCH based on a target slot and     │
│  the DCI                                                │
└─────────────────────────────────────────────────────────┘
```

FIG. 9

200

```
┌────────────────────┐                    ┌────────────────────┐
│   Network device   │                    │  Terminal device   │
└────────────────────┘                    └────────────────────┘
          │                                          │
          │  S240: First configuration               │
          ├ ─ ─ ─ ─   information          ─ ─ ─ ─ ─▶│
          │                                          │
          │  S201a: Second configuration             │
          ├ ─ ─ ─ ─   information          ─ ─ ─ ─ ─▶│
          │                                          │
          │  S201b: Third configuration              │
          ├ ─ ·· ─ ·   information         ─ ·· ─ ·· ▶│
          │                                          │
          │            ┌───────────────────────────────────────┐
          │            │  S210: Perform blind detection on DCI  │
          │            └───────────────────────────────────────┘
          │                                          │
          │            ┌┄┄┄┄┄┄┄┄┄┄┄┄┄┄┄┄┄┄┄┄┄┄┄┄┄┄┄┄┄┐
          │            ┆ S230: Determine a target slot based on ┆
          │            ┆ the DCI                                ┆
          │            └┄┄┄┄┄┄┄┄┄┄┄┄┄┄┄┄┄┄┄┄┄┄┄┄┄┄┄┄┄┘
          │                                          │
          │            ┌───────────────────────────────────────┐
          │            │  S220: Determine a sending slot of a   │
          │            │  PDSCH and/or a sending slot of a PUSCH│
          │            │  based on the target slot and the DCI  │
          │            └───────────────────────────────────────┘
          │                                          │
```

FIG. 10

FIG. 11

FIG. 12

FIG. 13

FIG. 14

EP 4 518 231 A1

EP 4 518 231 A1

FIG. 15

44

Communication apparatus 1000

Processing unit 1010

Transceiver unit 1020

FIG. 16

Communication apparatus 1100

Processor 1110

Memory 1120

Bus

FIG. 17

## INTERNATIONAL SEARCH REPORT

| International application No. |
| --- |
| **PCT/CN2023/098789** |

| A. | CLASSIFICATION OF SUBJECT MATTER |
| --- | --- |

H04L5/00(2006.01)i; H04W72/04(2023.01)i

According to International Patent Classification (IPC) or to both national classification and IPC

| B. | FIELDS SEARCHED |
| --- | --- |

Minimum documentation searched (classification system followed by classification symbols)

IPC: H04L H04W

Documentation searched other than minimum documentation to the extent that such documents are included in the fields searched

Electronic data base consulted during the international search (name of data base and, where practicable, search terms used)

CNABS; CNTXT; CNKI; VEN; USTXT; EPTXT; WOTXT; 3GPP: 下行控制信息, 下行链路控制信息, 物理上行共享信道, 物理下行共享信道, 时隙, 差值, 间隔, 偏移, 聚合等级, 聚合级别, 多个, 重复, DCI, PDSCH, PUSCH, slot?, offset?, aggregation level, AL, multi+, repetition

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 110536451 A (ZTE CORP.) 03 December 2019 (2019-12-03) description, paragraphs [0053]-[0152] and [0379]-[0402] | 1, 2, 4, 9, 11, 14, 15, 17, 22, 24-35 |
| X | CN 113709870 A (DATANG MOBILE COMMUNICATIONS EQUIPMENT CO., LTD.) 26 November 2021 (2021-11-26) description, paragraphs [0243]-[0345] | 1, 2, 4, 9, 11, 14, 15, 17, 22, 24-35 |
| X | CN 112368972 A (QUALCOMM INC.) 12 February 2021 (2021-02-12) description, paragraphs [0063]-[0086] | 1, 2, 4, 9, 11, 14, 15, 17, 22, 24-35 |
| A | US 2021360667 A1 (ELECTRONICS AND TELECOMMUNICATIONS RESEARCH INSTITUTE) 18 November 2021 (2021-11-18) entire document | 1-35 |

☐ Further documents are listed in the continuation of Box C. ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **05 September 2023** | **15 September 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
**Information on patent family members**

International application No.

**PCT/CN2023/098789**

| Patent document cited in search report | | | Publication date (day/month/year) | Patent family member(s) | | | Publication date (day/month/year) |
|---|---|---|---|---|---|---|---|
| CN | 110536451 | A | 03 December 2019 | BR | 112022003972 | A2 | 24 May 2022 |
| | | | | EP | 4027725 | A1 | 13 July 2022 |
| | | | | US | 2022329386 | A1 | 13 October 2022 |
| | | | | WO | 2021043010 | A1 | 11 March 2021 |
| CN | 113709870 | A | 26 November 2021 | WO | 2021232873 | A1 | 25 November 2021 |
| | | | | TW | 202145826 | A | 01 December 2021 |
| | | | | TW | 202308440 | A | 16 February 2023 |
| | | | | TW | 785557 | B1 | 01 December 2022 |
| | | | | EP | 4156817 | A1 | 29 March 2023 |
| CN | 112368972 | A | 12 February 2021 | EP | 3821554 | A1 | 19 May 2021 |
| | | | | US | 2020022139 | A1 | 16 January 2020 |
| | | | | US | 11464008 | B2 | 04 October 2022 |
| | | | | WO | 2020013926 | A1 | 16 January 2020 |
| US | 2021360667 | A1 | 18 November 2021 | KR | 20210139153 | A | 22 November 2021 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210665435

- CN 202210926852